(19) Europäisches Patentamt
European Patent Office
Office européen des brevets

(11) **EP 4 645 224 A2**

(12) **EUROPEAN PATENT APPLICATION**

(43) Date of publication:
**05.11.2025 Bulletin 2025/45**

(21) Application number: **25185897.3**

(22) Date of filing: **27.06.2025**

(51) International Patent Classification (IPC):
***G06T 7/70*** *(2017.01)*

(52) Cooperative Patent Classification (CPC):
**G06T 7/80; G06V 20/588;** G06T 7/73;
G06T 2207/30256

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 CN 202410868139**

(71) Applicant: **Shanghai Horizon Intelligent
Automotive
Technology Co., Ltd.
Shanghai Jiading District 201800 (CN)**

(72) Inventors:
• **XIONG, Huanjian
Shanghai, 201800 (CN)**
• **WANG, Mengyu
Shanghai, 201800 (CN)**

(74) Representative: **v. Bezold & Partner
Patentanwälte - PartG mbB
Ridlerstraße 57
80339 München (DE)**

(54) **METHOD AND APPARATUS FOR DETERMINING LANE LINE, MEDIUM, AND DEVICE**

(57) A method includes: determining a first image corresponding to a first camera and a second image; determining, based on the first image, a first lane line pixel point set; determining, based on the second image, a second lane line pixel point set; determining, based on the first lane line pixel point set and a first extrinsic parameter of the first camera, a first lane line sampling point set corresponding to the first lane line pixel point set in a vehicle local coordinate system; determining a corrected extrinsic parameter; determining, based on the second lane line pixel point set and the corrected extrinsic parameter, a second lane line sampling point set corresponding to the second lane line pixel point set in the vehicle local coordinate system; and determining the lane line based on the first lane line sampling point set and the second lane line sampling point set.

**EP 4 645 224 A2**

```
Determining a first image corresponding to a first camera and a second image corresponding to a
second camera                                                                              201

Determining, based on the first image, a first lane        Determining, based on the second image, a    203
line pixel point set                         202           second lane line pixel point set

Determining, based on the first lane line pixel            Determining a corrected extrinsic parameter
point set and a first extrinsic parameter of the first     corresponding to a second extrinsic parameter of   205
camera, a first lane line sampling point set      204      the second camera
corresponding to the first lane line pixel point set
in a vehicle local coordinate system                       Determining, based on the second lane line pixel    206
                                                           point set and the corrected extrinsic parameter, a
                                                           second lane line sampling point set
                                                           corresponding to the second lane line pixel point
                                                           set in the vehicle local coordinate system

Determining a lane line based on the first lane line sampling point set and the second lane line     207
sampling point set
```

**Fig.2**

**Description**

FIELD OF THE INVENTION

The disclosure relates to computer vision technology, and in particular, to a method and apparatus for determining a lane line, a medium, and a device.

**BACKGROUND OF THE INVENTION**

In field of intelligent driving, the application of cameras with different fields of view (FOV for short), such as wide-angle and narrow-angle cameras, for perceiving lane lines around vehicles has gradually emerged. However, due to a camera installation error, an extrinsic parameter calibration error, an image processing error, etc. among cameras with different FOVs, lane lines perceived by different FOV cameras may exhibit lateral deviations when transformed into a same coordinate system (e.g., the vehicle local coordinate system), which will lead to poor precision and stability of a fusion result for lane lines perceived by different FOV cameras.

**SUMMARY OF THE INVENTION**

Embodiments of this disclosure provide a method and apparatus for determining a lane line, a medium, and a device, capable of improving precision and stability of a fusion result for lane lines perceived by different FOV cameras.
A first aspect of this disclosure provides a method for determining a lane line, including: determining a first image corresponding to a first camera and a second image corresponding to a second camera; determining, based on the first image, a first lane line pixel point set; determining, based on the second image, a second lane line pixel point set; determining, based on the first lane line pixel point set and a first extrinsic parameter of the first camera, a first lane line sampling point set corresponding to the first lane line pixel point set in a vehicle local coordinate system; determining a corrected extrinsic parameter corresponding to a second extrinsic parameter of the second camera; determining, based on the second lane line pixel point set and the corrected extrinsic parameter, a second lane line sampling point set corresponding to the second lane line pixel point set in the vehicle local coordinate system; and determining the lane line based on the first lane line sampling point set and the second lane line sampling point set.
A second aspect of this disclosure provides an apparatus for determining a lane line, including: a first processing module, configured to determine a first image corresponding to a first camera and a second image corresponding to a second camera; a second processing module, configured to determine, based on the first image, a first lane line pixel point set; a third processing module, configured to determine, based on the second image, a second lane line pixel point set; a fourth processing module, configured to determine, based on the first lane line pixel point set and a first extrinsic parameter of the first camera, a first lane line sampling point set corresponding to the first lane line pixel point set in a vehicle local coordinate system; a fifth processing module, configured to determine a corrected extrinsic parameter corresponding to a second extrinsic parameter of the second camera; a sixth processing module, configured to determine, based on the second lane line pixel point set and the corrected extrinsic parameter, a second lane line sampling point set corresponding to the second lane line pixel point set in the vehicle local coordinate system; and a seventh processing module, configured to determine the lane line based on the first lane line sampling point set and the second lane line sampling point set.
A third aspect of this disclosure provides a computer readable storage medium. The storage medium stores a computer program, which, when executed by a processor to implement the method for determining a lane line according to any one of embodiments of this disclosure.
A fourth aspect of this disclosure provides an electronic device, including: a processor; and a memory configured to store processor-executable instructions. The processor is configured to read the executable instructions from the memory, and execute the instructions to implement the method for determining a lane line according to any one of embodiments of this disclosure.
A fifth aspect of this disclosure provides a computer program product. When instructions in the computer program product are executed by a processor, the method for determining a lane line according to any one of embodiments of this disclosure is implemented.
Based on a method and apparatus for determining a lane line, a medium, and a device according to embodiments of this disclosure, while a vehicle drives, a first image corresponding to a first camera and a second image corresponding to a second camera may be determined; a first lane line pixel point set may be determined based on the first image; a second lane line pixel point set may be determined based on the second image; then, a first lane line sampling point set corresponding to the first lane line pixel point set in a vehicle local coordinate system may be determined based on the first lane line pixel point set and a first extrinsic parameter of the first camera; and a corrected extrinsic parameter corresponding to a second extrinsic parameter of the second camera may be determined; a second lane line sampling point set corresponding to the second lane line pixel point set in the vehicle local coordinate system may be determined based on the second lane line pixel point set and the corrected extrinsic parameter; and the lane line may be determined by combining the first lane line sampling point set and the second lane line sampling point set. The corrected extrinsic parameter of the second camera serves to eliminate or reduce lateral deviations between the second lane line sampling point set and the first lane line sampling point set, thereby improving consistency between the perceived lane lines perceived by the first camera and by the second camera, avoiding or lowering a degree of distortion of fusion of the perceived lane lines perceived by the different cameras, and improving the precision and stability of the fused lane line.

BRIEF DESCRIPTION OF THE DRAWINGS

FIG. 1 is an illustrative scenario of application of a method for determining a lane line according to this disclosure.

FIG. 2 is a flowchart of a method for determining a lane line according to an illustrative embodiment of this disclosure.

FIG. 3 is a flowchart of a method for determining a lane line according to another illustrative embodiment of this disclosure.

FIG. 4 is a flowchart of determining a corrected extrinsic parameter corresponding to a second extrinsic parameter according to an illustrative embodiment of this disclosure.

FIG. 5 is a flowchart of determining a corrected extrinsic parameter corresponding to a second extrinsic parameter according to another illustrative embodiment of this disclosure.

FIG. 6 is a block flowchart of iteratively determining a corrected extrinsic parameter of a second camera according to an illustrative embodiment of this disclosure.

FIG. 7 is a schematic diagram of a principle for determining lateral deviations according to an illustrative embodiment of this disclosure.

FIG. 8 is a flowchart of a method for determining a lane line according to yet another illustrative embodiment of this disclosure.

FIG. 9 is a flowchart of a method for determining a lane line according to still another illustrative embodiment of this disclosure.

FIG. 10 is a schematic diagram of fusing lane line sampling point sets according to an illustrative embodiment of this disclosure.

FIG. 11 is a schematic diagram of a structure of an apparatus for determining a lane line according to an illustrative embodiment of this disclosure.

FIG. 12 is a schematic diagram of a structure of an apparatus for determining a lane line according to another illustrative embodiment of this disclosure.

FIG. 13 is a schematic diagram of a structure of an apparatus for determining a lane line according to yet another illustrative embodiment of this disclosure.

FIG. 14 is a schematic diagram of a structure of an apparatus for determining a lane line according to still another illustrative embodiment of this disclosure.

FIG. 15 is a schematic diagram of a structure of an apparatus for determining a lane line according to yet another illustrative embodiment of this disclosure.

FIG. 16 is a schematic of a structure of an electronic device according to embodiments of this disclosure.

## DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that the scope of this disclosure is not limited to relative arrangements, numeric expressions, and numerical values of components and steps described in these embodiments, unless specified otherwise.

Disclosure overview

In implementing this disclosure, the inventor discovers that in field of intelligent driving, the application of cameras with different fields of view (FOV for short), such as wide-angle and narrow-angle cameras, for perceiving lane lines around vehicles has gradually emerged, which is primarily due to the varying perception accuracy of lane lines at different distances from the vehicle across FOVs. For example, the wide-angle camera exhibits higher accuracy for nearby lane lines and lower accuracy for distant lane lines, while the narrow-angle cameras demonstrate superior performance for distant lane lines, which compensates for the limitations of the wide-angle cameras in long-range detection. However, due to a camera installation error, an extrinsic parameter calibration error, an image processing error, etc. among cameras with different FOVs, lane lines perceived by different FOV cameras may exhibit lateral deviations, such as a certain angular deviation in the vehicle local coordinate system between a part of a wide-angle lane line and a part of a narrow-angle lane line that should have coincided with each other, when transformed into a same coordinate system (e.g., the vehicle local coordinate system), which will lead to poor precision and stability of a fusion result for lane lines perceived by different FOV cameras.

Illustrative overview

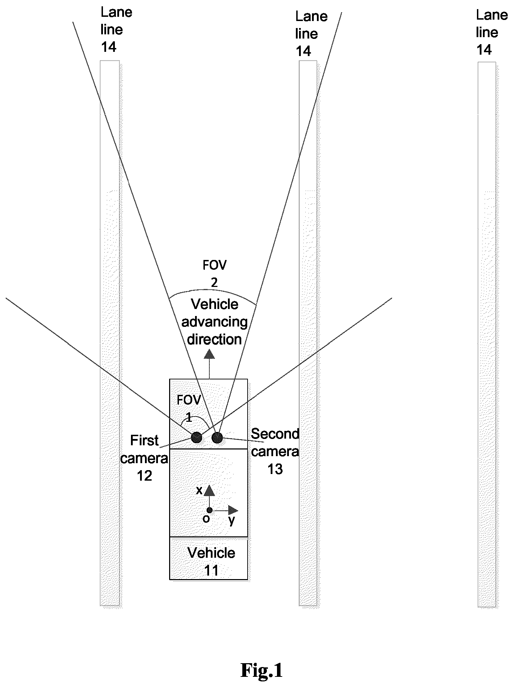

FIG. 1 is an illustrative scenario of application of a method for determining a lane line according to this disclosure. As shown in FIG. 1, while the vehicle 11 drives on a road, images of an environment within a forward-looking range of the vehicle 11 may be acquired using a first camera 12 and a second camera 13 on the vehicle, for determining perceived lane lines corresponding to a lane line 14, to provide valid lane line data for vehicle 11 control and decision making. The first camera 12 and the second camera 13 may be cameras with different FOVs. As shown in FIG. 1, a FOV FOV1 of the first camera 12 is greater than a FOV FOV2 of the second camera 13. There is an overlap region of a range of angles of view of the first camera 12 and a range of angles of view of the second camera 13. As shown in the figure, the first camera 12 and the second camera 13 both are forward-looking cameras of the vehicle, such that the first camera 12 and the second camera 13 both may perceive a lane line 14 within the forward-looking range of the vehicle. As the first camera 12 and the second camera 13 have the different FOVs, the first camera 12 and the second camera 13 may perceive segments of the lane line 14 located within different distance segments. For example, the first camera 12 mainly provides a good perception precision for perceiving a close-distance segment of the lane line 14 located within a close distance segment, and then the second camera 13 mainly focuses on perceiving a long-distance segment of the lane line located within a long distance segment. In this way, valid perception of the close-distance segment and the long-distance segment of the lane line may be implemented using the first camera 12 and the second camera 13, and a holistically perceived fused lane line may be obtained by fusing perceived lane lines perceived based on the different FOV. Using the method for determining a lane line according to this disclosure, after a first image corresponding to the first camera 12 and a second image corresponding to the second camera 13 have been obtained, a first lane line pixel point set may be determined based on the first image, and a second lane line pixel point set may be determined based on the second image; then, a first lane line sampling point set corresponding to the first lane line pixel point set in a vehicle local coordinate system (an xoy coordinate system of ego vehicle is taken as an example in the figure) may be determined based on the first lane line pixel point set and a first extrinsic parameter of the first camera 12; and a corrected extrinsic parameter corresponding to a second extrinsic parameter of the second camera 13 may be determined; a second lane line sampling point set corresponding to the second lane line pixel point set in the vehicle local coordinate system may be determined based on the second lane line pixel point set and the corrected extrinsic parameter; and then, based on the first lane line sampling point set and the second lane line sampling point set, a lane line is determined as a final perceived lane line configured for vehicle 11 control and decision making. The corrected extrinsic parameter of the second camera 13 serves to eliminate or reduce lateral deviations between the second lane line sampling point set and the first lane line sampling point set, thereby improving consistency between the perceived lane lines perceived by the first camera 12 and by the second camera 13, avoiding or lowering a degree of distortion of fusion of the perceived lane lines perceived by the different cameras, and improving the precision and stability of the fused lane line.

Illustrative method

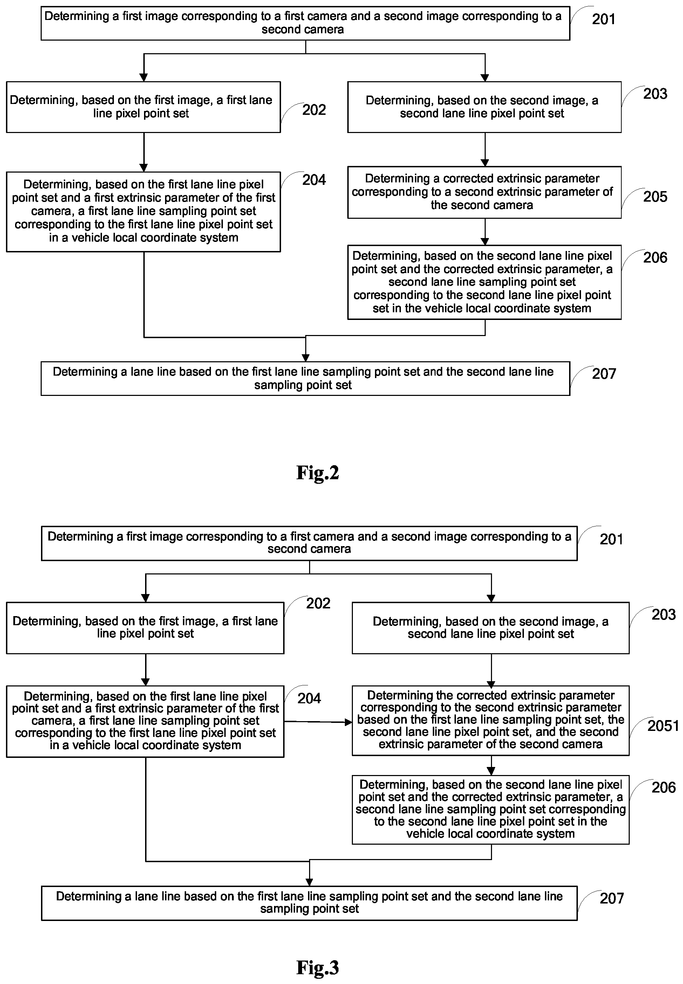

FIG. 2 is a flowchart of a method for determining a lane line according to an illustrative embodiment of this disclosure. This embodiment may be applied to an electronic device, for example specifically to an onboard computing platform. As shown in FIG. 2, the method according to embodiments of this disclosure may include steps as follows.

Step 201, Determining a first image corresponding to a first camera and a second image corresponding to a second camera

There is an overlap region of the range of angles of view of the first camera 12 and the range of angles of view of the second camera 13, such that the first image and the second image may contain pixel regions of a same lane line. Optionally, the first image and the second image may contain pixel regions of different distance ranges (also referred to as distance segments) of the same lane line, and there is an overlap part of a distance range corresponding to the first image and a distance range corresponding to the second image, to facilitate subsequent lane line fusion.

In some optional embodiments, the FOV of the first camera greater than the FOV of the second camera. For example, the first camera and the second camera both are forward-looking cameras of the vehicle, the first camera is a wide-angle camera, and the second camera is a narrow-angle camera. The FOV of the wide-angle camera is greater than the FOV of the narrow-angle camera. For example, the FOV of the wide-angle camera is of 120 degrees, and the FOV of the narrow-angle camera is of 30 degrees. Valid perception of a lane line within a close distance range in front of the vehicle may be performed using the wide-angle camera. Valid perception of a lane line within a long distance range in front of the vehicle may be performed using the narrow-angle camera, as supplement to a result of wide-angle lane line perception, which allows to improve a recall of a long-distance lane line.

In some optional embodiments, the first image corresponding to the first camera and the second image corresponding to the second camera may be images acquired by the cameras, or images obtained by performing preprocessing on the images acquired by the cameras, with no specific limitation. The preprocessing for example may include image enhancement, resolution transformation, cropping, etc., to obtain images meeting a need of subsequent processing.

In some optional embodiments, if frame rates of the first camera and the second camera differ, then the first image and the second image may be images synchronized in time.

Step 202, Determining, based on the first image, a first lane line pixel point set.

The first lane line pixel point set may include one or more pixel point subsets (which may be referred to as first pixel point subsets or first lane line pixel point subsets) corresponding respectively to one or more lane lines obtained by performing perception on the first image. A pixel point subset corresponding to the lane line may include a group of pixel points belonging to that lane line. For example, the first lane line pixel point set may include pixel point subsets corresponding to a left lane line and a right lane line of a main lane where the vehicle is currently located, a pixel point subset corresponding to a left lane line of a left lane to the left of the main lane, a pixel point subset corresponding to a right lane line of a right lane to the right of the main lane, etc. A case of a specific lane line pixel point subset included in the first lane line pixel point set is determined according to a specific result of perception performed on the first image.

In some optional embodiments, the first lane line pixel point set may be determined based on any lane line detection algorithm or model that can be implemented. For example, semantic segmentation may be performed on the first image using a lane line semantic segmentation model, to obtain a semantic segmentation result, and the first lane line pixel point set may be determined according to the semantic segmentation result. Specifically, the semantic segmentation result may include any pixel point set in the first image that belongs to a lane line, and the pixel point subset belonging to each lane line may be obtained by pixel point set clustering.

In some optional embodiments, the pixel point subset of each lane line included in the first lane line pixel point set may be a set of more valid pixel points obtained by preset processing. The preset processing may include center pixel point extraction, sparsification, etc. For each lane line, center pixel point extraction refers to extracting pixel points belonging to a center line of the lane line from the pixel point subset of the lane line. For example, of each row of pixel points, there may be a plurality of pixel points belonging to the lane line. Of the plurality of the pixel points, a pixel point located in the middle may be set as a center pixel point extracted from the row, to obtain a center pixel point set. Sparsification may refer to sampling the center pixel point set according to a preset pixel interval, to obtain a sparsified pixel point set, and setting the sparsified pixel point set as the pixel point subset corresponding to the lane line. The first lane line pixel point set may be determined based on the one or more pixel point subsets corresponding respectively to the one or more lane lines. By center pixel point extraction and sparsification enables to greatly reduce a number of pixel points of the pixel point subset of each lane line, thereby effectively improving efficiency of the subsequent processing.

Step 203, Determining, based on the second image, a second lane line pixel point set.

The second lane line pixel point set may include one or more pixel point subsets (which may be referred to as second pixel point subsets or second lane line pixel point subsets) corresponding respectively to one or more lane lines obtained by performing perception on the second image. A pixel point subset corresponding to each lane line may include a group of pixel points belonging to that lane line.

In some optional embodiments, a specific operation in determining the second lane line pixel point set is similar to a specific operation in determining the first lane line pixel point set, which is not repeated here.

It should be noted that step 202 and step 203 may be performed in any order.

Step 204, Determining, based on the first lane line pixel point set and a first extrinsic parameter of the first camera, a first lane line sampling point set corresponding to the first lane line pixel point set in a vehicle local coordinate system.

The first extrinsic parameter of the first camera is a pre-calibrated extrinsic parameter of the first camera with respect to the vehicle local coordinate system. The first extrinsic parameter may include a location and an attitude of a camera coordinate system of the first camera with respect to the vehicle local coordinate system, and may be expressed as $T = (x, y, z, yaw, roll, pitch)$, or as a translation vector and a rotation matrix, with no limitation to a specific form of the extrinsic parameter. $x, y, z$ denotes the location of the camera coordinate system of the first camera with respect to the vehicle local coordinate system, $yaw, pitch, roll$ denote a yaw, a pitch, and a roll of the camera coordinate system of the first camera with respect to the vehicle local coordinate system, respectively. The vehicle local coordinate system may be a coordinate system with an origin set on a preset location on the vehicle. For example, the vehicle local coordinate system may be a coordinate system of this ego vehicle with an origin set on a center of a rear axle of the vehicle (also referred to as the vehicle coordinate system, or VCS for short) or a local coordinate system with an origin set as another location on the vehicle. There is no limitation to a specific vehicle local coordinate system.

In some optional embodiments, pixel points in the first lane line pixel point set may be transformed to the vehicle local coordinate system based on the first extrinsic parameter combining an intrinsic parameter of the first camera, to obtain the first lane line sampling point set in the vehicle local coordinate system.

In some optional embodiments, in case the first lane line pixel point set is a pixel point set obtained by clustering with no sparsification, the first lane line pixel point set may be transformed to the vehicle local coordinate system, and then sampling points on a center line may be extracted and sparsified, to obtain the first lane line sampling point set.

Step 205, Determining a corrected extrinsic parameter corresponding to a second extrinsic parameter of the second camera.

The second extrinsic parameter of the second camera is a pre-calibrated extrinsic parameter of the second camera with respect to the vehicle local coordinate system. The corrected extrinsic parameter is an extrinsic parameter obtained by correcting the second extrinsic parameter in a certain mode and configured for fusing perceived lane lines perceived in the first image and the second image. The corrected extrinsic parameter serves to lower lateral deviations of a result of perceiving the same lane line by the different cameras in the same coordinate system due to the camera installation error, the extrinsic parameter calibration error, the image perception error, etc., to improve the precision and stability of the fusion result of fusing the perceived lane lines.

In some optional embodiments, the corrected extrinsic parameter corresponding to the second extrinsic parameter may be determined in advance and stored in a preset storage space. Then, the corrected extrinsic parameter corresponding to the second extrinsic parameter may be read directly from the preset storage space.

In some optional embodiments, the corrected extrinsic parameter corresponding to the second extrinsic parameter may be computed in real time at each time frame while the vehicle drives. That is, according to a principle of minimizing the lateral deviations, the corrected extrinsic parameter corresponding to the second extrinsic parameter may be computed based on the lateral deviations in the same coordinate system between the lane lines perceived in a first image and a second image acquired in real time. Then, the second extrinsic parameter is replaced with the corrected extrinsic parameter, for fusing the perceived lane lines perceived in the first image and the second image.

In some optional embodiments, the corrected extrinsic parameter corresponding to the second extrinsic parameter may be determined at any one historical time frame before a current time frame (also referred to as a current moment) and stored in the preset storage space. Then, the corrected extrinsic parameter corresponding to the second extrinsic parameter may be read from the preset storage space. For example, the corrected extrinsic parameter corresponding to the second extrinsic parameter may be computed according to a case of lateral deviations of lane lines in the same coordinate system that are perceived in actual images acquired by the first camera and the second camera at part of the time frames according to a certain frequency while the vehicle drives. Then, during a period of time after the corrected extrinsic parameter has been obtained, the corrected extrinsic parameter may not be computed, and instead, a corrected extrinsic parameter obtained by a most recent computation is used directly until the next time for computing the corrected extrinsic parameter, and when a new round of computation is performed, a new corrected extrinsic parameter is obtained, a corrected extrinsic parameter obtained by a preceding computation is replaced with the new corrected extrinsic parameter, and so on, which enables to reduce a number of times to compute the corrected extrinsic parameter, and to lower computing resource consumption while guaranteeing accuracy and validity of the corrected extrinsic parameter.

Step 206, Determining, based on the second lane line pixel point set and the corrected extrinsic parameter, a second lane line sampling point set corresponding to the second lane line pixel point set in the vehicle local coordinate system.

A relation of transformation between a pixel coordinate system of the second image and the vehicle local coordinate system may be determined based on the corrected extrinsic parameter and an intrinsic parameter of the second camera, such that the second lane line pixel point set may be transformed to the vehicle local coordinate system according to the relation of transformation, to obtain a corresponding sampling point set in the vehicle local coordinate system. The corresponding sampling point set in the vehicle local coordinate system (or the sampling point set after certain processing) may be determined as the second lane line sampling point set corresponding to the second lane line pixel point set.

It should be noted that step 205 to step 206 of the determining the second lane line sampling point set and step 204vmay be performed in any order.

Step 207, Determining a lane line based on the first lane line sampling point set and the second lane line sampling point set.

The determined lane line may be a fitted lane line curve. A lane line curve may be denoted by a curve coefficient, a specific form of which is not limited.

In some optional embodiments, the lane line curve may be a quadratic curve, a cubic curve, etc.

In some optional embodiments, the first lane line sampling point set and the second lane line sampling point set may be fused, and lane line fitting may be performed, to obtain the lane line curve, which serves as a lane line obtained at the current time frame.

In some optional embodiments, in accordance with the first lane line pixel point set and the second lane line pixel point set, the first lane line sampling point set may include one or more lane line sampling point subsets corresponding respectively to the one or more lane lines, and the second lane line sampling point set may include one or more lane line sampling point subsets corresponding respectively to the one or more lane lines. Then, in case of a plurality of lane lines, the fusion of the first lane line sampling point set and the second lane line sampling point set may include lane line matching, tracking, filtering, etc., to obtain a fused lane line curve corresponding to each lane line. The matching refers to determining a matching relation regarding whether each lane line sampling point subset in the first lane line sampling point set and each lane line sampling point subset in the second lane line sampling point set belong to the same lane line. A correspondence between the one or more lane line sampling point subsets in the first lane line sampling point set and the one or more lane line sampling point subsets in the second lane line sampling point set may be determined by lane line matching, to determine two to-be-fused sampling point subsets corresponding to each lane line. The tracking refers to determining a tracking relation between a lane line sampling point subset corresponding to the current time frame and a lane line curve obtained in a preceding time frame, to establish an association between a perceived lane line perceived at the current time frame and a perceived lane line perceived at a historical time frame. The filtering refers to performing, based on a lane line observation quantity (a fused lane line sampling point set) corresponding to the current time frame perceived by performing perception on the images, filtering update on a lane line prediction quantity (a predicted lane line curve coefficient) corresponding to the current time frame predicted based on odometer information, to obtain a filtered lane line curve at the current time frame, thereby obtaining the lane line determined at the current time frame.

With the method for determining a lane line according to this embodiment, while the vehicle drives, a first lane line pixel point set may be determined based on the first image corresponding to the first camera, and a second lane line pixel point set may be determined based on the second image corresponding to the second camera; then, a first lane line sampling point set corresponding to the first lane line pixel point set in a vehicle local coordinate system may be determined based on the first lane line pixel point set and a first extrinsic parameter of the first camera; and a corrected extrinsic parameter corresponding to a second extrinsic parameter of the second camera may be determined; a second lane line sampling point set corresponding to the second lane line pixel point set in the vehicle local coordinate system may be determined based on the second lane line pixel point set and the corrected extrinsic parameter; and a lane line is determined by combining the first lane line sampling point set and the second lane line sampling point set. As the second lane line sampling point set is obtained by transformation based on the corrected extrinsic parameter of the second extrinsic parameter, and the corrected extrinsic parameter of the second camera serves to eliminate or reduce lateral deviations between the second lane line sampling point set and the first lane line sampling point set, thereby enabling to improve consistency between the perceived lane lines perceived by the first camera and by the second camera, avoiding or lowering a degree of distortion of fusion of the perceived lane lines perceived by the different cameras, and improving the precision and stability of the fused lane line.

FIG. 3 is a flowchart of a method for determining a lane line according to another illustrative embodiment of this disclosure.

In some optional embodiments, based on the embodiment shown in FIG. 2, as shown in FIG. 3, step 205 of determining a corrected extrinsic parameter corresponding to a second extrinsic parameter of the second camera may specifically include steps as follows.

Step 2051, Determining the corrected extrinsic parameter corresponding to the second extrinsic parameter based on the first lane line sampling point set, the second lane line pixel point set, and the second extrinsic parameter of the second camera.

As the second extrinsic parameter of the second camera is the calibrated extrinsic parameter of the second camera, the second lane line pixel point set may be transformed to the vehicle local coordinate system based on the second extrinsic parameter of the second camera, to obtain a lane line sampling point set in the vehicle local coordinate system. Then, deviations (also referred to as errors) between the lane line sampling point set in the vehicle local coordinate system and the first lane line sampling point set may be determined, and the deviations are used to determine the corrected extrinsic parameter corresponding to the second extrinsic parameter. Specifically, the corrected extrinsic parameter corresponding to the second extrinsic parameter may be obtained by solving a corrected extrinsic parameter which minimizes the deviations.

With this embodiment, the corrected extrinsic parameter corresponding to the second extrinsic parameter is determined using the first lane line sampling point set, the second lane line pixel point set, and the second extrinsic parameter of the second camera determined in real time, which enables to further improve timeliness and validity of the corrected extrinsic parameter, thereby reducing, to the greatest extent, a holistic lateral deviation between the perceived lane lines perceived by the different cameras due to various errors, and guaranteeing the precision and stability of the fused lane line.

In some optional embodiments, the first lane line sampling point set may include at least one lane line sampling point subset corresponding respectively to at least one lane line of a road where the vehicle is currently located. The at least one lane line may include a main lane line of a lane where the vehicle is currently located.

There may be one or two main lane lines. A main lane line refers to a lane line of the lane where the vehicle is currently located. That is, the main lane line may include at least one of a left lane line and a right lane line of the lane where the vehicle is located. In case there are two main lane lines, the corrected extrinsic parameter corresponding to the second extrinsic parameter may be determined by combining a case of lateral deviations of the two main lane lines. Alternatively, the corrected extrinsic parameter corresponding to the second extrinsic parameter may be determined based on a case of lateral deviations of any one of the two main lane lines.

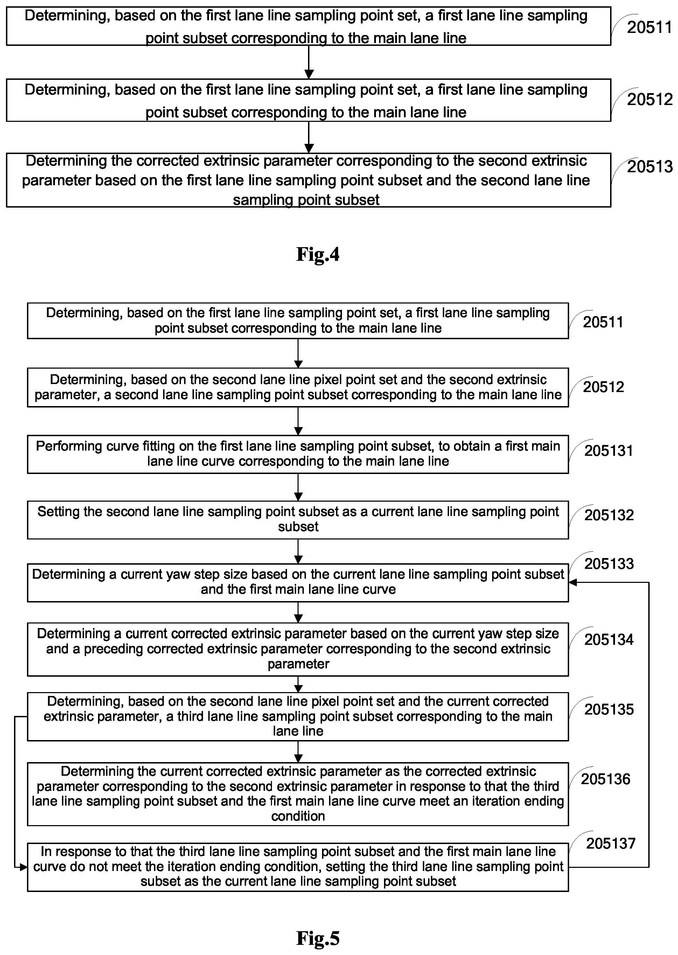

FIG. 4 is a flowchart of determining a corrected extrinsic parameter corresponding to a second extrinsic parameter according to an illustrative embodiment of this disclosure.

In some optional embodiments, step 2051 of determining the corrected extrinsic parameter corresponding to the second extrinsic parameter based on the first lane line sampling point set, the second lane line pixel point set, and the second extrinsic parameter of the second camera may include steps as follows.

Step 20511, Determining, based on the first lane line sampling point set, a first lane line sampling point subset corresponding to the main lane line.

A lane line sampling point subset corresponding to the main lane line may be determined according to a lateral coordinate size relation among the one or more lane line sampling point subsets in the first lane line sampling point set, as the first lane line sampling point subset corresponding to the main lane line. For example, it may be determined whether the lane line is a left lane line or a right lane line according to lateral coordinates of a lane line sampling point subset of a lane line being greater than 0. A lateral distance between a sampling point and this ego vehicle may be determined according to a specific size of a lateral coordinate thereof. A sampling point subset of a left lane line with a least lateral distance is determined as a first lane line sampling point subset corresponding to a left main lane line, and a sampling point subset of a right lane line with a least lateral distance is determined as a first lane line sampling point subset corresponding to a right main lane line.

Step 20512, Determining, based on the second lane line pixel point set and the second extrinsic parameter, a second lane line sampling point subset corresponding to the main lane line.

The second lane line sampling point subset may include at least one of a second lane line sampling point subset corresponding to the left main lane line and a second lane line sampling point subset corresponding to the right main lane line.

In some optional embodiments, the second lane line pixel point set may be transformed to the vehicle local coordinate system based on the second extrinsic parameter and the intrinsic parameter of the second camera, and then, the second lane line sampling point subset corresponding to the main lane line may be determined according to an operation in determining the first lane line sampling point subset as described above.

It should be noted that step 20511 and step 20512 may be performed in any order.

Step 20513, Determining the corrected extrinsic parameter corresponding to the second extrinsic parameter based on the first lane line sampling point subset and the second lane line sampling point subset.

The first lane line sampling point subset and the second lane line sampling point subset are lane line sampling point subsets with a certain matching relation in a unitary local coordinate system. Therefore, the lateral deviations may be computed according to the first lane line sampling point subset and the second lane line sampling point subset for computing the corrected extrinsic parameter corresponding to the second extrinsic parameter. The matching relation refers to a relation indicating whether the subsets belong to the same lane line. For example, the first lane line sampling point subset and the second lane line sampling point subset both are sampling point subsets corresponding to the left main lane line (or the right main lane line). Then, it may be determined that the first lane line sampling point subset and the second lane line sampling point subset belong to the same lane line. Alternatively, the first lane line sampling point subset includes first sampling point subsets corresponding respectively to the left main lane line and the right main lane line, and the second lane line sampling point subset includes second sampling point subsets corresponding respectively to the left main lane line and the right main lane line. Then, a first sampling point subset and a second sampling point subset corresponding to the left main lane line belong to the same left main lane line, and a first sampling point subset and a second sampling point subset corresponding to the right main lane line belong to the same right main lane line.

In some optional embodiments, at least one sampling point in the first lane line sampling point subset has a longitudinal coordinate same as that of a sampling point in the second lane line sampling point subset. That is, a longitudinal distance range covered by the first lane line sampling point subset and a longitudinal distance range covered by the second lane line sampling point subset overlap on an overlap range segment, to facilitate computing the lateral deviations between the first lane line sampling point subset and the second lane line sampling point subset using two groups of sampling points belonging to the same range segment, further improving the accuracy of the corrected extrinsic parameter.

With this embodiment, the corrected extrinsic parameter corresponding to the second extrinsic parameter is determined by the first lane line sampling point subset and the second lane line sampling point subset in the vehicle local coordinate system of main lane lines perceived respectively in the first image and the second image. As a main lane line is closer to this vehicle than a lane line other than any main lane line, a perception precision thereof is higher, thereby enabling to further improve the accuracy and validity of the corrected extrinsic parameter.

FIG. 5 is a flowchart of determining a corrected extrinsic parameter corresponding to a second extrinsic parameter according to another illustrative embodiment of this disclosure.

In some optional embodiments, step 20513 of determining the corrected extrinsic parameter corresponding to the second extrinsic parameter based on the first lane line sampling point subset and the second lane line sampling point subset may include steps as follows.

Step 205131, Performing curve fitting on the first lane line sampling point subset, to obtain a first main lane line curve corresponding to the main lane line.

The curve fitting may be quadratic curve fitting, cubic curve fitting, etc. Accordingly, the first main lane line curve may be a first-degree curve (i.e., a straight line), a quadratic curve, a cubic curve, etc.

In some optional embodiments, the curve fitting may be performed using any curve fitting algorithm in related art. For example, the curve fitting algorithm may include least squares, maximum likelihood estimate, etc., with no specific limitation.

Step 205132, Setting the second lane line sampling point subset as a current lane line sampling point subset.

Step 205133, Determining a current yaw step size based on the current lane line sampling point subset and the first main lane line curve.

The current yaw step size refers to a step size for iterative yaw update, and may be expressed as $\Delta yaw$. The current yaw step size includes a yaw change direction and a yaw change amount of the iteration. For example, $\Delta yaw$ greater than zero denotes a direction of increase with iteration, and $\Delta yaw$ less than zero denotes a direction of decrease with iteration.

In some optional embodiments, the current yaw step size may be determined according to a lateral deviation between respective sampling points in the current lane line sampling point subset and the first main lane line curve. For example, a direction of change and an amount of change of a current yaw may be determined according to a case of change (increase or decrease) of the lateral deviation with respect to a lateral deviation of a preceding iteration and a yaw step size of the preceding iteration, and the current yaw step size may be determined according to the direction of change and the amount of change of the current yaw.

In some optional embodiments, sampling points (referred to as overlap sampling points) in an overlap region of the current lane line sampling point subset that overlaps with the longitudinal distance range covered by the first lane line sampling point subset may be determined according to longitudinal coordinates of sampling points of the current lane line sampling point subset and longitudinal coordinates of sampling points of the first lane line sampling point subset, and the current yaw step size may be determined based on lateral deviations between these overlap sampling points and the first main lane line curve. As the current lane line sampling point subset and the first main lane line curve belong to the same lane line, lane lines in an overlap part of the longitudinal distance range should completely overlap, i.e., with 0 lateral deviations, and yaws of the lane lines should coincide. In view of this, the lateral deviations between the overlap sampling points in the overlap part and the first main lane line curve are computed for guiding yaw correction, such that yaw of the overlap sampling points in the overlap region that are transformed based on corrected yaw gradually reaches consistency with the first main lane line curve, achieving a goal of reducing the lateral deviations.

In some optional embodiments, the current yaw step size may be determined using a preset gradient algorithm. The gradient algorithm for example may include stochastic gradient descent method, Newton's method, Gauss-Newton method, etc., with no specific limitation.

Step 205134, Determining a current corrected extrinsic parameter based on the current yaw step size and a preceding corrected extrinsic parameter corresponding to the second extrinsic parameter.

The preceding corrected extrinsic parameter is a corrected extrinsic parameter determined in a preceding iteration. The preceding corrected extrinsic parameter initially is the second extrinsic parameter. That is, the preceding corrected extrinsic parameter at a first iteration is the second extrinsic parameter.

In some optional embodiments, the current corrected extrinsic parameter may be obtained by performing correction based on the current yaw step size and a preceding corrected yaw in the preceding corrected extrinsic parameter. An illustrative current corrected extrinsic parameter T' may be denoted as follows.

$$T_n = T_{n-1} + (0,0,0, \Delta yaw, 0,0) = (x, y, z, yaw_{n-1} + \Delta yaw, row, pitch)$$

Wherein n denotes a current number of iterations. T_(n-1) denotes the preceding corrected extrinsic parameter corresponding to the second extrinsic parameter. A process of determining the preceding corrected extrinsic parameter coincides with that of determining the current corrected extrinsic parameter.

Step 205135, Determining, based on the second lane line pixel point set and the current corrected extrinsic parameter, a third lane line sampling point subset corresponding to the main lane line.

The second lane line pixel point set may be transformed to the vehicle local coordinate system based on the current corrected extrinsic parameter and the intrinsic parameter of the second camera, to obtain the lane line sampling point set in the vehicle local coordinate system, and a lane line sampling point subset in the lane line sampling point set corresponding to the main lane line may be determined as the third lane line sampling point subset corresponding to the main lane line.

In some optional embodiments, a pixel point subset in the second lane line pixel point set corresponding to the main lane line may be determined, and the pixel point subset corresponding to the main lane line may be transformed to the vehicle local coordinate system based on the current corrected extrinsic parameter and the intrinsic parameter of the second camera, to obtain the third lane line sampling point subset corresponding to the main lane line.

Step 205136, Determining the current corrected extrinsic parameter as the corrected extrinsic parameter corresponding to the second extrinsic parameter in response to that the third lane line sampling point subset and the first main lane line curve meet an iteration ending condition.

The iteration ending condition may include an iteration number condition and an error condition. The iteration number condition may include that the current number of iterations reaches an iteration number threshold. The error condition may include that an error sum (total deviation) is less than an error threshold. The error sum may refer to a sum of absolute values of lateral deviations corresponding respectively to sampling points, or a sum of squares of the lateral deviations corresponding respectively to the sampling points. There is no limitation to a specific mode of determining the error sum. If the iteration ending condition is met by a current iteration, the current corrected extrinsic parameter may be determined as the corrected extrinsic parameter corresponding to the second extrinsic parameter, and an iteration process is ended.

With this embodiment, the corrected extrinsic parameter corresponding to the second extrinsic parameter is obtained by iterative correction, such that yaw of a lane line sampling point subset corresponding to the second lane line pixel point set transformed based on the corrected extrinsic parameter gradually approaches that of the first lane line sampling point subset, thereby implementing accurate valid correction of the second extrinsic parameter, and providing an accurate valid corrected extrinsic parameter for fusing a perceived lane line perceived by the first camera and the perceived lane line perceived by the second camera.

In some optional embodiments, step 205133 of determining a current yaw step size based on the current lane line sampling point subset and the first main lane line curve may include steps as follows.

Target sampling points on the first main lane line curve corresponding respectively to lane line sampling points in the current lane line sampling point subset are determined; lateral deviations corresponding respectively to the lane line sampling points in the current lane line sampling point subset are determined based on the lane line sampling points in the current lane line sampling point subset and the target sampling points; and the current yaw step size is determined according to the lateral deviations corresponding respectively to the lane line sampling points.

An target sampling point on the first main lane line curve corresponding to a lane line sampling point (or sampling point for short) in the current lane line sampling point subset is a sampling point having a longitudinal coordinate (or longitudinal distance to this ego vehicle) same as that of the lane line sampling point. That is, the target sampling point on the first main lane line curve that has the same longitudinal coordinate (or the same longitudinal distance) may be determined according to the longitudinal coordinate (or longitudinal distance) of the lane line sampling point. A lateral deviation corresponding to the lane line sampling point may be determined based on a lateral coordinate of the lane line sampling point and a lateral coordinate of the corresponding target sampling point. That is, the lateral deviation may be expressed as a difference between the lateral coordinates of the lane line sampling point and the corresponding target sampling point or a lateral distance between the lane line sampling point and the target sampling point. In view of this, a lateral deviation corresponding to each sampling point (or any sampling point in the overlap part of the longitudinal distance range) in the current lane line sampling point subset may be obtained.

In some optional embodiments, an object function may be constructed according to the lateral deviations corresponding respectively to the lane line sampling points in the current lane line sampling point subset, and a yaw step size of each iteration is solved by minimizing the object function. A solving mode may include the above stochastic gradient descent method, Newton's method, Gauss-Newton method, etc., specifics of which are not repeated.

With this embodiment, the lateral deviations between the lane line sampling points in the current lane line sampling point subset and the respective corresponding target sampling points on the first main lane line curve are computed for solving a yaw step size of the iteration process, thereby enabling to obtain an accurate valid yaw step size, and to provide a valid yaw adjustment direction and a valid yaw adjustment amount for determining the corrected extrinsic parameter.

In some optional embodiments, as shown in FIG. 5, step 20513 of determining the corrected extrinsic parameter corresponding to the second extrinsic parameter based on the first lane line sampling point subset and the second lane line sampling point subset further may include steps as follows.

Step 205137, In response to that the third lane line sampling point subset and the first main lane line curve do not meet the iteration ending condition, setting the third lane line sampling point subset as the current lane line sampling point subset, and then returning to the determining a current yaw step size based on the current lane line sampling point subset and the first main lane line curve in step 205133.

In case the third lane line sampling point subset and the first main lane line curve do not meet the iteration ending condition, the process may continue by setting the third lane line sampling point subset as the current lane line sampling point subset, and proceeding to a next iteration, i.e., returning to step 205133, and repeating execution of step 205133 to step 205127, until the iteration process is ended, to obtain the corrected extrinsic parameter corresponding to the second extrinsic parameter.

With this embodiment, the iteration process may continue in case the iteration ending condition is not met by the current iteration, to implement cyclic iterative correction of the extrinsic parameter of the second camera, to continuously improve the accuracy and validity of the corrected extrinsic parameter.

In some optional embodiments, step 20513 of determining the corrected extrinsic parameter corresponding to the second extrinsic parameter based on the first lane line sampling point subset and the second lane line sampling point subset may include steps as follows.

A first corrected extrinsic parameter of the second extrinsic parameter at a current time frame is determined based on the first lane line sampling point subset and the second lane line sampling point subset; and the corrected extrinsic parameter corresponding to the second extrinsic parameter is determined based on the first corrected extrinsic parameter and a historical corrected extrinsic parameter of the second extrinsic parameter corresponding to a historical time frame.

The historical time frame (i.e., a historical moment) may refer to a time frame before the current time frame. There may be one or a plurality of historical time frames. The first corrected extrinsic parameter corresponding to the current time frame is a corrected extrinsic parameter determined based on the real-time first lane line sampling point subset and the real-time second lane line sampling point subset at the current time frame. For obtaining of the first corrected extrinsic parameter, one may refer to step 205131 to step 205137, which are not repeated here. A historical corrected extrinsic parameter corresponding to a historical time frame is determined in a lane line determination process corresponding to the historical time frame, with a determination principle that may coincide with that of the first corrected extrinsic parameter corresponding to the current time frame. The corrected extrinsic parameter corresponding to the second extrinsic parameter is determined by combining the first corrected extrinsic parameter and the historical corrected extrinsic parameter. The corrected extrinsic parameter corresponding to the second extrinsic parameter may be determined based on the first corrected extrinsic parameter, the historical corrected extrinsic parameter, and a preset determining rule. The preset determining rule for example may include averaging the first corrected extrinsic parameter and the historical corrected extrinsic parameter, or averaging after removing an outlier, and setting the average as the corrected extrinsic parameter corresponding to the second extrinsic parameter. Alternatively, the rule may include weighting the corrected extrinsic parameters corresponding respectively to the historical time frame and the current time frame according to timeliness weights of the historical time frame and the current time frame, to obtain the corrected extrinsic parameter corresponding to the second extrinsic parameter. Alternatively, the rule may include determining a case of corrected extrinsic parameter convergence based on the historical corrected extrinsic parameter and the first corrected extrinsic parameter, and determining the first corrected extrinsic parameter as the corrected extrinsic parameter corresponding to the second extrinsic parameter in case a convergence condition is met. No more corrected extrinsic parameter needs to be computed at any subsequent time frames, to reduce the amount of computation. Of course, at the subsequent time frames, the corrected extrinsic parameter may be computed once in each time frame, or once every preset number of time frames. No limitation is set in embodiments of this disclosure. In case the convergence condition is not met, the corrected extrinsic parameter corresponding to the second extrinsic parameter may be obtained by averaging, or the first corrected extrinsic parameter may be set as the corrected extrinsic parameter corresponding to the second extrinsic parameter temporarily, and corrected extrinsic parameter computation may continue in the next time frame.

With this embodiment, the corrected extrinsic parameter corresponding to the second extrinsic parameter is determined by combining the first corrected extrinsic parameter computed in the current time frame and the historical corrected extrinsic parameter computed in the historical time frame, thereby enabling to further improve the accuracy and validity of the corrected extrinsic parameter.

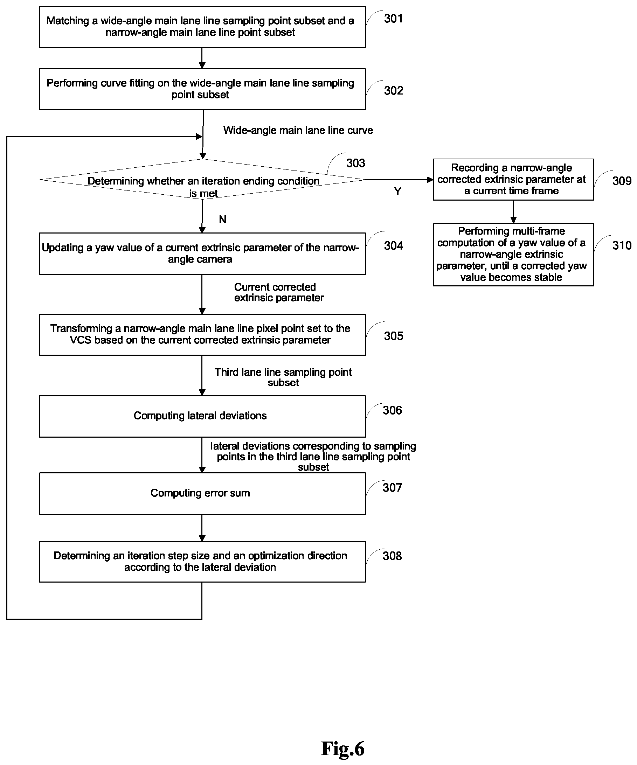

In some optional embodiments, FIG. 6 is a block flowchart of iteratively determining a corrected extrinsic parameter of a second camera according to an illustrative embodiment of this disclosure. As shown in FIG. 6, the first camera is a wide-angle camera, the second camera is a narrow-angle camera, the first image is a wide-angle image, and the second image is a narrow-angle image. The iteration flow includes steps as follows.

Step 301, Matching a wide-angle main lane line sampling point subset (i.e., the first lane line sampling point subset) and a narrow-angle main lane line point subset (i.e., the second lane line sampling point subset) That is, as the main lane line may include the left main lane line and the right main lane line, and each main lane line corresponds to one first lane line sampling point subset and one second lane line sampling point subset, it is to be determined, by matching, which first lane line sampling point subset and which second lane line sampling point subset belong to a same main lane line.

Step 302, Performing curve fitting on the wide-angle main lane line sampling point subset. The fitting may be performed using cubic curve fitting, to obtain a wide-angle main lane line curve (i.e., the first main lane line curve).

Step 303, Determining whether an iteration ending condition is met. If not, proceed to step 304, and if yes, proceed to step 309. The iteration ending condition includes that a number of iterative optimizations is greater than or equal to the iteration number threshold, or that the error sum is less than or equal to the error threshold.

Step 304, Updating a yaw value of a current extrinsic parameter of the narrow-angle camera, to obtain a current corrected extrinsic parameter.

Step 305, Transforming a narrow-angle main lane line pixel point set (i.e., pixel points in the second lane line pixel point set that correspond to the main lane line) to the VCS based on the current corrected extrinsic parameter, to obtain the third lane line sampling point subset corresponding to the main lane line.

Step 306, Computing lateral deviations. That is, a lateral deviation from each sampling point (which may be each sampling point in an overlap part of the third lane line sampling point subset that overlaps with the wide-angle main lane line curve in a longitudinal direction) in the third lane line sampling point subset to the wide-angle main lane line curve at a respective longitudinal distance is computed.

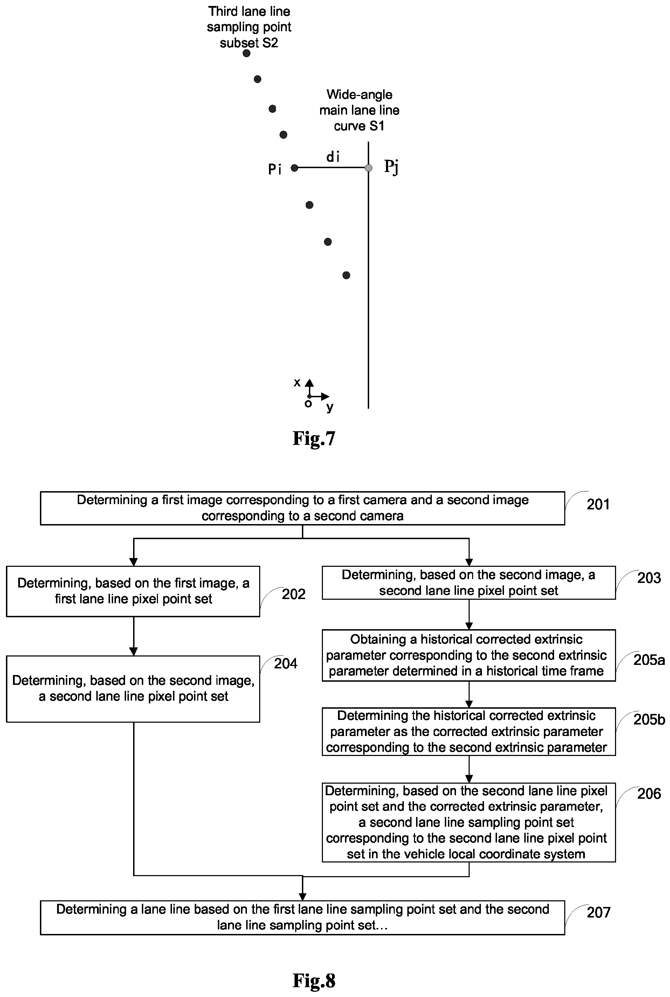

Illustratively, FIG. 7 is a schematic diagram of a principle for determining lateral deviations according to an illustrative embodiment of this disclosure. As shown in FIG. 7, xoy denotes the vehicle local coordinate system, and the wide-angle main lane line curve is denoted by S1. An target sampling point Pj on the wide-angle main lane line curve S1 with the same longitudinal distance is determined according to the longitudinal distance of each sampling point Pi in the third lane line sampling point subset S2, and a lateral distance di between the sampling point Pi and the target sampling point Pj is computed and set as the lateral deviation corresponding to the sampling point Pi.

Step 307, Computing the error sum. A sum of an absolute values of each lateral deviation may be computed and set as the error sum. Alternatively, a sum of a square of each lateral deviation may be computed and set as the error sum. Alternatively, a weight of each sampling point may be determined according to the longitudinal distance of each sampling point, and the absolute value of each lateral deviation is weighted according to the weight of each sampling point, to obtain the error sum. A principle for determining the weight of each sampling point may be that the greater the longitudinal distance is, the less the weight. The error sum is used to determine whether the iteration ending condition is met.

Step 308, Determining an iteration step size and an optimization direction according to the lateral deviation. Then returns to step 303. The iteration step size and the optimization direction are the current yaw step size.

Step 307 and step 308 may be performed in any order.

Step 309, Recording a narrow-angle corrected extrinsic parameter (i.e., the first corrected extrinsic parameter corresponding to the second extrinsic parameter) at a current time frame. Alternatively, a yaw value of the corrected extrinsic parameter is recorded.

Step 310, Performing multi-frame computation of a yaw value of a narrow-angle extrinsic parameter, until a corrected yaw value becomes stable. That is, it is determined whether the corrected yaw value converges in each time frame by combining the yaw value of the corrected extrinsic parameter corresponding to the current time frame and a yaw value of a historical corrected extrinsic parameter corresponding to a historical time frame.

After a stable corrected yaw value has been obtained, the stable corrected yaw value may be used to fuse perceived lane lines perceived in a subsequent moment. No more corrected extrinsic parameter computation may have to be performed within a certain subsequent duration or during an entire subsequent driving process, which enables to reduce the number of times to compute the corrected extrinsic parameter, and to lower the computing resource consumption.

FIG. 8 is a flowchart of a method for determining a lane line according to yet another illustrative embodiment of this disclosure.

In some optional embodiments, based on the embodiment shown in FIG. 2, as shown in FIG. 8, step 205 of determining a corrected extrinsic parameter corresponding to a second extrinsic parameter of the second camera may include steps as follows.

Step 205a, Obtaining a historical corrected extrinsic parameter corresponding to the second extrinsic parameter determined in a historical time frame

The historical time frame may be any one time frame before the current time frame. For example, multi-frame computation of the corrected extrinsic parameter may be performed within a preset duration since the vehicle starts to drive, to obtain the corrected extrinsic parameter corresponding to the second extrinsic parameter, which is set as a historical corrected extrinsic parameter corresponding to a candidate moment. In each moment after the preset duration, the historical corrected extrinsic parameter is set as the corrected extrinsic parameter corresponding to the second extrinsic parameter. Alternatively, the corrected extrinsic parameter is computed according to the certain frequency. For example, a corrected extrinsic parameter may be computed once every 10 seconds (such as being computed through one or a plurality of time frames). Then, a historical corrected extrinsic parameter obtained by a most recent computation performed before a current time frame that is a non-computing time frame is set as the corrected extrinsic parameter corresponding to the second extrinsic parameter.

Step 205b, Determining the historical corrected extrinsic parameter as the corrected extrinsic parameter corresponding to the second extrinsic parameter

With this embodiment, the historical corrected extrinsic parameter corresponding to the second extrinsic parameter determined in the historical time frame is determined as the corrected extrinsic parameter used in the current time frame, i.e., the corrected extrinsic parameter does not need to be computed in real time in some time frames, thereby enabling to reduce the amount of computation, and to improve efficiency of determining the lane line.

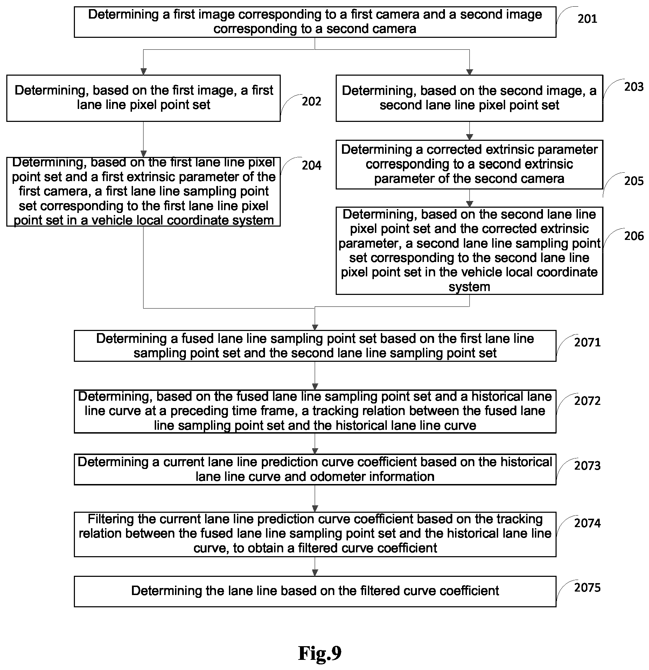

FIG. 9 is a flowchart of a method for determining a lane line according to still another illustrative embodiment of this disclosure.

In some optional embodiments, based on the embodiment shown in FIG. 2, as shown in FIG. 9, step 207 of determining a lane line based on the first lane line sampling point set and the second lane line sampling point set may include steps as follows.

Step 2071, Determining a fused lane line sampling point set based on the first lane line sampling point set and the second lane line sampling point set.

The fused lane line sampling point set may include one or more fused lane line sampling point subsets corresponding respectively to the one or more lane lines. A lane line sampling point subset (which may be referred to as a first sampling point subset) in the first lane line sampling point set corresponding to one lane line and a lane line sampling point subset (which may be referred to as a second sampling point subset) in the second lane line sampling point set corresponding to that lane line may be fused to obtain a fused lane line sampling point subset corresponding to the lane line. In view of this, a fused lane line sampling point subset corresponding to each lane line is obtained. A first sampling point subset and a second sampling point subset corresponding to a lane line may be fused in a mode that may include one or a plurality of kinds of processing such as sampling point merging, sampling point duplicate removal, sampling point sparsification, etc., with no specific limitation. For example, a result of merging the first sampling point subset and the second sampling point subset corresponding to the lane line may directly be set as the fused lane line sampling point subset corresponding to the lane line. As another example, a result of merging and duplicate removal may be set as the fused lane line sampling point subset corresponding to the lane line. Duplicate removal may refer to that one of two sampling points at one longitudinal distance, or an average of the two sampling points, is selected and set as a sampling point obtained by duplicate removal at that longitudinal distance. Sparsification may refer to that a sampling point number is reduced according to a longitudinal distance interval.

Step 2072, Determining, based on the fused lane line sampling point set and a historical lane line curve at a preceding time frame, a tracking relation between the fused lane line sampling point set and the historical lane line curve.

The tracking relation refers to a relation indicating whether a fused lane line sampling point subset in the fused lane line sampling point set and a historical lane line curve corresponding to a lane line belong to the same lane line. That is, the tracking relation may represent a historical lane line curve corresponding to a lane line to which the fused lane line sampling point subset belongs. The historical lane line curve may include one or more lane line curves corresponding to the one or more lane lines determined in the preceding time frame. In case of a plurality of lane lines, a historical lane line curve corresponding to a fused lane line sampling point subset may be determined based on a relation of a lateral distance between a sampling point in the fused lane line sampling point subset and an historical lane line curve. The tracking relation between the fused lane line sampling point set and the historical lane line curve is obtained in view of this.

Step 2073, Determining a current lane line prediction curve coefficient based on the historical lane line curve and odometer information.

The current lane line prediction curve coefficient refers to a prediction value of a lane line curve coefficient corresponding to the current time frame. The odometer information may include driving state information such as a velocity, an acceleration, an angular velocity, etc., of the vehicle from the preceding time frame to the current time frame. As the vehicle drives, a lane line that can be perceived by a camera gradually extends, however a state of the lane line has not changed in a global coordinate system (such as a world coordinate system or a map coordinate system). Therefore, historical lane line curve prediction up to the current time frame may be performed based on the historical lane line curve and the odometer information. Specifically, the historical lane line curve may be sampled to obtain a plurality of historical sampling points, current predicted sampling points corresponding respectively to the historical sampling points may be predicted according to the odometer information, and curve fitting is performed based on the current predicted sampling points, to obtain the current lane line prediction curve coefficient.

Step 2074, Filtering the current lane line prediction curve coefficient based on the tracking relation between the fused lane line sampling point set and the historical lane line curve, to obtain a filtered curve coefficient.

The fused lane line sampling point set represents an observation quantity of the lane line at the current time frame. The lane line curve coefficient is set as a state variable. A filter may be constructed based on the state variable, a state transition matrix, and an observation formula. The state variable of the filter is updated using the observation quantity, and the filtered curve coefficient is obtained based on an updated state quantity. A mode of filtering includes but is not limited to Kalman filtering, extended Kalman filtering, and other filters.

Step 2075, Determining the lane line based on the filtered curve coefficient.

The lane line curve may be determined by the filtered curve coefficient. For example, the lane line curve may be determined, by quadratic curve coefficients $(c_0, c_1, c_2)$, to be $y = c_0 + c_1x + c_2x^2$. The lane line curve may be determined as a current perceived lane line, for vehicle decision making and control.

With this embodiment, the first lane line sampling point set and the second lane line sampling point set are fused, to obtain the fused lane line sampling point set, and the lane line is obtained by filtering in combination with the curve coefficient predicted based on the odometer information. As the second lane line sampling point set is obtained by transformation based on the corrected extrinsic parameter of the second camera, the lateral deviations between the second lane line sampling point set and the first lane line sampling point set are reduced effectively, thereby effectively improving validity of the fused lane line sampling point set, which, combined with prediction and filtering based on the odometer information, implements valid determination of the lane line curve coefficient, thereby improving accuracy of the lane line, providing accurate valid lane line reference for vehicle decision making and control.

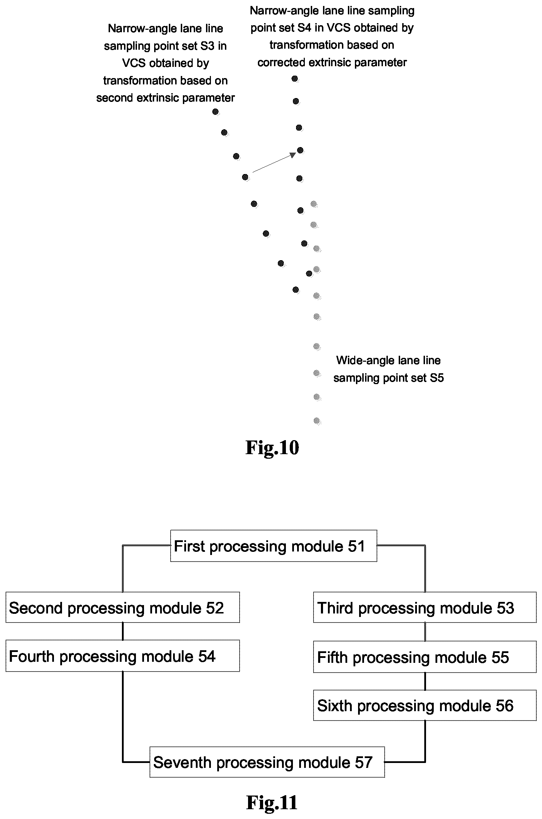

In some optional embodiments, FIG. 10 is a schematic diagram of fusing lane line sampling point sets according to an illustrative embodiment of this disclosure. As shown in FIG. 10, one lane line is taken as an example. S3 is a narrow-angle lane line sampling point set obtained by transforming a narrow-angle lane line pixel point set corresponding to the lane line to the VCS (i.e., the vehicle local coordinate system) based on the calibrated extrinsic parameter (the second extrinsic parameter) of the second camera. The corrected extrinsic parameter corresponding to the second extrinsic parameter is corrected with respect to the yaw value of the second extrinsic parameter. S4 is a narrow-angle lane line sampling point set obtained by transforming the narrow-angle lane line pixel point set corresponding to the lane line to the VCS based on the corrected extrinsic parameter. S5 is a wide-angle lane line sampling point set in the VCS corresponding to a wide-angle lane line pixel point set. It may be seen that the corrected extrinsic parameter changes a yaw of the narrow-angle lane line sampling point set S4 in the VCS with respect to S3. A lateral deviation between S4 and S5 is greatly reduced compared to a lateral deviation between S3 and S5, such that S4 is in better consistency with the wide-angle lane line sampling point set S5. Thereby, S4 and S5 are fused to obtain a fused lane line sampling point set, which is used to fit the lane line, to obtain a lane line curve corresponding to the lane line, effectively lowering a degree of distortion of the fused lane line.

In some optional embodiments, step 20513 of determining the corrected extrinsic parameter corresponding to the second extrinsic parameter based on the first lane line sampling point subset and the second lane line sampling point subset may include: performing curve fitting on the first lane line sampling point subset, to obtain a first main lane line curve corresponding to the main lane line; determining a current yaw step size based on the second lane line sampling point subset and the first main lane line curve; and determining the corrected extrinsic parameter corresponding to the second extrinsic parameter based on the current yaw step size, a preceding yaw correction value, the second lane line sampling point subset, and the first main lane line curve.

The preceding yaw correction value is a yaw correction value, of a corrected extrinsic parameter obtained in a preceding iteration, with respect to the second extrinsic parameter. At the first iteration, as there is no preceding iteration, the preceding yaw correction value is an initialization value, and the initialization value is zero. For a mode of determining the first main lane line curve and a mode of determining the current yaw step size, one may refer to a foregoing embodiment.

In some optional embodiments, a lateral deviation between an object point (which is obtained by correcting, by a current yaw correction value, a sampling point in the second lane line sampling point subset) and the first main lane line curve may be computed according to a lateral deviation mapping rule obtained in advance, and according to the current yaw step size, the preceding yaw correction value, the second lane line sampling point subset, and the first main lane line curve. The corrected extrinsic parameter corresponding to the second extrinsic parameter may be determined according to whether the iteration ending condition is met by the lateral deviation.

With this embodiment, iterative yaw correction value adjustment may be implemented directly in the vehicle local coordinate system, which enables to avoid an operation of projecting the second lane line pixel point set to the vehicle local coordinate system in each iteration, which thereby enables to lower the amount of computation and accelerate iterative convergence.

In some optional embodiments, the determining the corrected extrinsic parameter corresponding to the second extrinsic parameter based on the current yaw step size, a preceding yaw correction value, the second lane line sampling point subset, and the first main lane line curve includes:

determining a current corrected extrinsic parameter based on the current yaw step size, the preceding yaw correction value, and the second extrinsic parameter; determining, based on the current yaw step size, the preceding yaw correction value, the second lane line sampling point subset, and the first main lane line curve, lateral deviations corresponding respectively to sampling points in the second lane line sampling point subset under the current corrected extrinsic parameter; and determining the current corrected extrinsic parameter as the corrected extrinsic parameter corresponding to the second extrinsic parameter in response to that the lateral deviations meet an iteration ending condition.

The current yaw correction value may be determined based on the current yaw step size and the preceding yaw correction value, and then a yaw in the second extrinsic parameter is corrected based on the current yaw correction value, to obtain the current corrected extrinsic parameter. The lateral deviations corresponding respectively to the sampling points in the second lane line sampling point subset under the current corrected extrinsic parameter refer to lateral deviations of object points, obtained by performing rotation transformation on the sampling points according to the current yaw correction value, with respect to the first main lane line curve.

In some optional embodiments, a mapping rule (i.e., the lateral deviation mapping rule) for mapping the current yaw step size, the preceding yaw correction value, the first main lane line curve, and the second lane line sampling point subset to a corrected lateral deviation may be determined in advance according to an association between a camera extrinsic parameter yaw change and a lane line sampling point change mapped to the vehicle local coordinate system. Then, based on the mapping rule, the current yaw step size, the preceding yaw correction value, the first main lane line curve, and the second lane line sampling point subset may be mapped to the lateral deviations corresponding respectively to the sampling points in the second lane line sampling point subset under the current corrected extrinsic parameter.

With this embodiment, in iteratively obtaining the corrected extrinsic parameter, the lateral deviations corresponding to the second lane line sampling point subset under the corrected extrinsic parameter may be computed directly according to the second lane line sampling point subset in the vehicle local coordinate system, thereby enabling to avoid projecting the pixel points in the second lane line pixel point set to the vehicle local coordinate system in each iteration, effectively reducing the amount of computation, and accelerating iterative convergence.

In some optional embodiments, the determining the corrected extrinsic parameter corresponding to the second extrinsic parameter based on the current yaw step size, a preceding yaw correction value, the second lane line sampling point subset, and the first main lane line curve further may include:

in response to that the lateral deviations do not meet the iteration ending condition, determining a next yaw step size based on the lateral deviations; and setting the next yaw step size as the current yaw step size, setting a current yaw correction value as the preceding yaw correction value, and repeating execution of the determining a current corrected extrinsic parameter based on the current yaw step size, the preceding yaw correction value, and the second extrinsic parameter, where the current yaw correction value is a yaw correction value of the current corrected extrinsic parameter with respect to the second extrinsic parameter.

For a specific operation in determining a yaw step size based on lateral deviations, one may refer to a foregoing embodiment. The iteration ending condition here coincides with that in a foregoing embodiment. If the lateral deviations corresponding to the current iteration (n-th iteration) do not meet the iteration ending condition, the iteration process is to continue, a sum of the current yaw step size corresponding to the n-th iteration and the preceding yaw correction value is determined as the current yaw correction value corresponding to the n-th iteration, the next yaw step size is determined based on the lateral deviations corresponding to the n-th iteration, and the process goes to the next iteration ((n+1)-th iteration). Then, the next yaw step size determined in the n-th iteration is the current yaw step size corresponding to the (n+1)-th iteration. The current yaw correction value obtained in the n-th iteration then is the preceding yaw correction value corresponding to the (n+1)-th iteration. Execution of the determining a current corrected extrinsic parameter based on the current yaw step size, the preceding yaw correction value, and the second extrinsic parameter and a subsequent step are repeated, and so on, until the lateral deviations meet the iteration ending condition, i.e., the current number of iterations reaches the iteration number threshold or the error sum is less than the error threshold. The current corrected extrinsic parameter is determined as the corrected extrinsic parameter corresponding to the second extrinsic parameter.

In some optional embodiments, the lateral deviation mapping rule may be determined as follows.

The first camera is a wide-angle camera (big eye), and the second camera is a narrow-angle camera (small eye). Assume that there is just rotation transformation between big-eye and small-eye sampling points in the vehicle local coordinate system. An extrinsic parameter correction value (i.e., the yaw change amount of the corrected extrinsic parameter obtained in the n-th iteration with respect to the second extrinsic parameter) obtained in the n-th iteration is expressed as rotation transformation R, and a narrow-angle lane line sampling point (i.e., the sampling point in the second lane line sampling point subset) is expressed as $P_i$, $i$ = 1,2, ..., $N$, where $N$ denotes a number of narrow-angle lane line sampling points. Then, in the (n+1)-th iteration, a distance d from a narrow-angle lane line sampling point $P_i'$ obtained by performing a rotation by the current yaw step size $d\gamma$ based on the extrinsic parameter correction value (yaw correction value) obtained in the n-th iteration to a wide-angle lane line curve (i.e., the wide-angle main lane line curve) may be denoted as follows.

$$d = P_i' \times v_k = R(0,0,d\gamma)P_i \times v_k \qquad \text{formula 1}$$

$v_k$ denotes a coefficient vector of the wide-angle lane line curve. $R(0,0,d\gamma)$ denotes a rotation matrix (rotation transformation) obtained by increasing the rotation transformation R corresponding to the yaw correction value obtained in a last (i.e., the n-th) iteration by the yaw step size $d\gamma$.

In case of rotation by a small angle, $R(0,0,d\gamma)$ may be approximately denoted as follows.

$$R(0,0,d\gamma) \approx \begin{bmatrix} 1 & -\gamma_n - d\gamma & 0 \\ \gamma_n + d\gamma & 1 & 0 \\ 0 & 0 & 1 \end{bmatrix} \qquad \text{formula 2}$$

$\gamma_n$ denotes the yaw correction value obtained in the n-th iteration.

By putting formula 2 into formula 1, the distance d from $P_i'$ to the wide-angle lane line curve (i.e., the wide-angle main lane line curve) may be obtained, and sorted to obtain:

$$d = R(0,0,d\gamma)P_i \times v_k = \begin{bmatrix} 1 & -\gamma_n - d\gamma & 0 \\ \gamma_n + d\gamma & 1 & 0 \\ 0 & 0 & 1 \end{bmatrix} P_i \times v_k \qquad \text{formula 3}$$

As a lane line sampling point in the vehicle local coordinate system lacks information on a z direction, the distance of the sampling point $P_i'$ obtained after the rotation to the wide-angle lane line curve may be computed based just on the yaw step size of the iteration process, and set as a lateral deviation of the sampling point, until an optimization result meets an iteration threshold or a number of iterations reaches the iteration number threshold, i.e., with embodiments of this disclosure, just the yaw value in the second extrinsic parameter is corrected. The distance from the sampling point obtained after the rotation to the main lane line curve may represent the lateral deviation of the sampling point obtained after the rotation from the main lane line curve. Therefore, formula 3 may serve as the lateral deviation mapping rule. During the iteration process, the lateral deviation corrected in the current iteration may be computed using the lateral deviation mapping rule denoted by formula 3, without requiring that the lane line pixel points be transformed to the vehicle local coordinate system in each iteration, thereby effectively reducing the amount of computation, and accelerating iterative convergence.

With embodiments of this disclosure, the corrected extrinsic parameter is obtained by correcting the second extrinsic parameter of the second camera, and used to improve consistency, in a bird's-eye-view (BEV) space (i.e., the vehicle local coordinate system), between the perceived lane lines perceived by the first camera and by the second camera, lowering the degree of distortion of fusion of lane lines acquired at different angles of view, thereby greatly improving the precision and stability of the fused lane line.

Respective embodiments of this disclosure may be implemented individually or as any combination that causes no conflict, specifics of which may be set as needed, and not limited in this disclosure.

Any one method for determining a lane line according to embodiments of this disclosure may be implemented by any appropriate device capable of data processing, including but not limited to a terminal device, a server, etc. Alternatively, the any one method for determining a lane line according to embodiments of this disclosure may be implemented by a processor. For example, the processor implements the any one method for determining a lane line mentioned in embodiments of this disclosure by calling respective instructions stored in a memory, which is not elaborated hereinafter.

Illustrative apparatus

FIG. 11 is a schematic diagram of a structure of an apparatus for determining a lane line according to an illustrative embodiment of this disclosure. The apparatus of the embodiment may be configured to implement the respective method embodiments of this disclosure. The apparatus as shown in FIG. 11 may include: a first processing module 51, a second processing module 52, a third processing module 53, a fourth processing module 54, a fifth processing module 55, a sixth processing module 56, and a seventh processing module 57.

The first processing module 51 is configured to determine a first image corresponding to a first camera and a second image corresponding to a second camera.

The second processing module 52 is configured to determine, based on the first image, a first lane line pixel point set.

The third processing module 53 is configured to determine, based on the second image, a second lane line pixel point set.

The fourth processing module 54 is configured to determine, based on the first lane line pixel point set and a first extrinsic parameter of the first camera, a first lane line sampling point set corresponding to the first lane line pixel point set in a vehicle local coordinate system.

The fifth processing module 55 is configured to determine a corrected extrinsic parameter corresponding to a second extrinsic parameter of the second camera.

The sixth processing module 56 is configured to determine, based on the second lane line pixel point set and the corrected extrinsic parameter, a second lane line sampling point set corresponding to the second lane line pixel point set in the vehicle local coordinate system.

The seventh processing module 57 is configured to determine the lane line based on the first lane line sampling point set and the second lane line sampling point set.

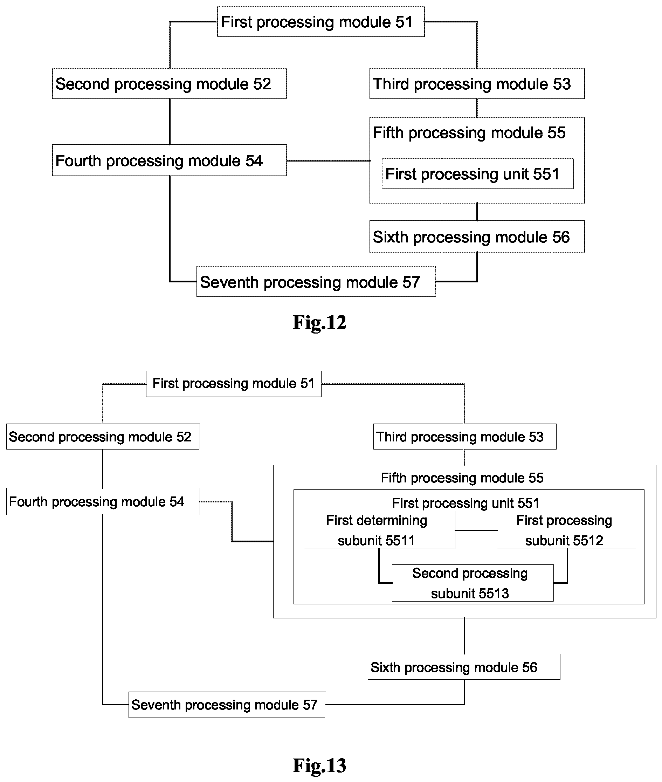

FIG. 12 is a schematic diagram of a structure of an apparatus for determining a lane line according to another illustrative embodiment of this disclosure.

In some optional embodiments, based on the embodiment shown in FIG. 11, as shown in FIG. 12, the fifth processing module 55 may include: a first processing unit 551, configured to determine the corrected extrinsic parameter corresponding to the second extrinsic parameter based on the first lane line sampling point set, the second lane line pixel point set, and the second extrinsic parameter of the second camera.

In some optional embodiments, the first lane line sampling point set includes at least one lane line sampling point subset corresponding respectively to at least one lane line of a road where the vehicle is currently located, and the at least one lane line includes a main lane line of a lane where the vehicle is currently located.

FIG. 13 is a schematic diagram of a structure of an apparatus for determining a lane line according to yet another illustrative embodiment of this disclosure.

In some optional embodiments, the first processing unit 551 may include:

a first determining subunit 5511, configured to determine, based on the first lane line sampling point set, a first lane line sampling point subset corresponding to the main lane line;
a first processing subunit 5512, configured to determine, based on the second lane line pixel point set and the second extrinsic parameter, a second lane line sampling point subset corresponding to the main lane line; and
a second processing subunit 5513, configured to determine the corrected extrinsic parameter corresponding to the second extrinsic parameter based on the first lane line sampling point subset and the second lane line sampling point subset.

In some optional embodiments, the second processing subunit 5513 is specifically configured to: perform curve fitting on the first lane line sampling point subset, to obtain a first main lane line curve corresponding to the main lane line; set the second lane line sampling point subset as a current lane line sampling point subset; determine a current yaw step size based on the current lane line sampling point subset and the first main lane line curve; determine a current corrected extrinsic parameter based on the current yaw step size and a preceding corrected extrinsic parameter corresponding to the second extrinsic parameter, where the preceding corrected extrinsic parameter is a corrected extrinsic parameter determined in a preceding iteration; determine, based on the second lane line pixel point set and the current corrected extrinsic parameter, a third lane line sampling point subset corresponding to the main lane line; and in response to that the third lane line sampling point subset and the first main lane line curve meet an iteration ending condition, determine the current corrected extrinsic parameter as the corrected extrinsic parameter corresponding to the second extrinsic parameter.

In some optional embodiments, the second processing subunit 5513 is specifically configured to: determine target sampling points on the first main lane line curve corresponding respectively to lane line sampling points in the current lane line sampling point subset; determine lateral deviations corresponding respectively to the lane line sampling points in the current lane line sampling point subset based on the lane line sampling points in the current lane line sampling point subset and the target sampling points; and determine the current yaw step size based on the lateral deviations corresponding respectively to the lane line sampling points in the current lane line sampling point subset.

In some optional embodiments, the second processing subunit 5513 further may be configured to: in response to that the third lane line sampling point subset and the first main lane line curve do not meet the iteration ending condition, set the third lane line sampling point subset as the current lane line sampling point subset, and repeat execution of the determining a current yaw step size based on the current lane line sampling point subset and the first main lane line curve.

In some optional embodiments, the second processing subunit 5513 is specifically configured to: determine, based on the first lane line sampling point subset and the second lane line sampling point subset, a first corrected extrinsic parameter of the second extrinsic parameter corresponding to a current time frame; and determine the corrected extrinsic parameter corresponding to the second extrinsic parameter based on the first corrected extrinsic parameter and a historical corrected extrinsic parameter of the second extrinsic parameter corresponding to a historical time frame.

In some optional embodiments, the second processing subunit 5513 is specifically configured to:

perform curve fitting on the first lane line sampling point subset, to obtain a first main lane line curve corresponding to the main lane line; determine a current yaw step size based on the second lane line sampling point subset and the first main lane line curve; and determine the corrected extrinsic parameter corresponding to the second extrinsic parameter based on the current yaw step size, a preceding yaw correction value, the second lane line sampling point subset, and the first main lane line curve, where the preceding yaw correction value is a yaw correction value, of a corrected extrinsic parameter obtained in a preceding iteration, with respect to the second extrinsic parameter.

In some optional embodiments, the second processing subunit 5513 is specifically configured to:

determine a current corrected extrinsic parameter based on the current yaw step size, the preceding yaw correction value, and the second extrinsic parameter; determine, based on the current yaw step size, the preceding yaw correction value, the second lane line sampling point subset, and the first main lane line curve, lateral deviations corresponding respectively to sampling points in the second lane line sampling point subset under the current corrected extrinsic parameter; and in response to that the lateral deviations meet an iteration ending condition, determine the current corrected extrinsic parameter as the corrected extrinsic parameter corresponding to the second extrinsic parameter.

In some optional embodiments, the second processing subunit 5513 further may be configured to:

in response to that the lateral deviations do not meet the iteration ending condition, determine a next yaw step size based on the lateral deviations; and set the next yaw step size as the current yaw step size, set a current yaw correction value as the preceding yaw correction value, and repeat execution of the determining a current corrected extrinsic parameter based on the current yaw step size, the preceding yaw correction value, and the second extrinsic parameter, where the current yaw correction value is a yaw correction value of the current corrected extrinsic parameter with respect to the second extrinsic parameter.

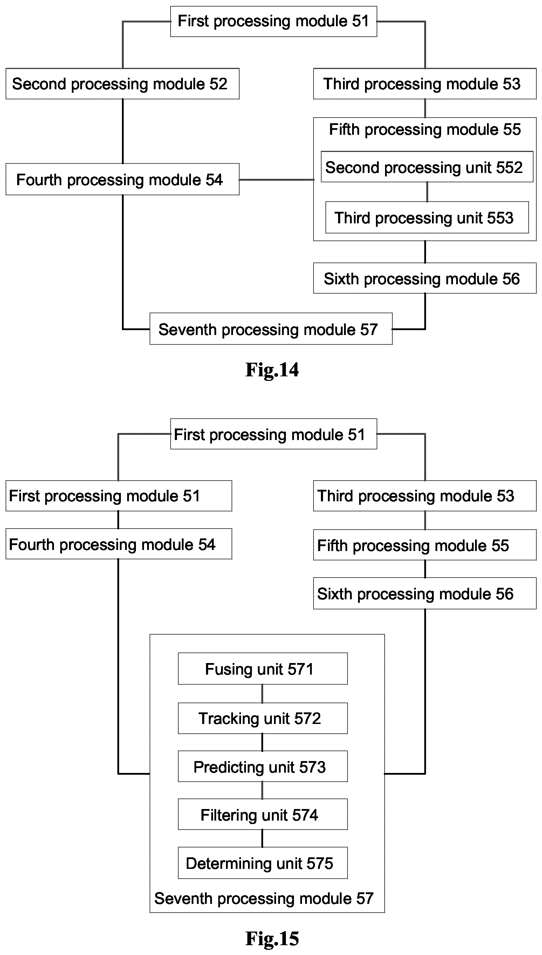

FIG. 14 is a schematic diagram of a structure of an apparatus for determining a lane line according to still another illustrative embodiment of this disclosure.

In some optional embodiments, based on the embodiment shown in FIG. 11, as shown in FIG. 14, the fifth processing module 55 may include: a second processing unit 552 and a third processing unit 553.

The second processing unit 552 is configured to obtain a historical corrected extrinsic parameter corresponding to the second extrinsic parameter determined in a historical time frame.

The third processing unit 553 is configured to determine the historical corrected extrinsic parameter as the corrected extrinsic parameter corresponding to the second extrinsic parameter.

In some optional embodiments, the fifth processing module 55 may include the first processing unit 551, the second processing unit 552, and the third processing unit 553 mentioned above, to enable to support two functions, i.e., determining the corrected extrinsic parameter in real time and determined the corrected extrinsic parameter in advance, thereby enabling to use a corrected extrinsic parameter determined in advance in case a corrected extrinsic parameter cannot be determined in real time.

FIG. 15 is a schematic diagram of a structure of an apparatus for determining a lane line according to yet another illustrative embodiment of this disclosure.

In some optional embodiments, based on the embodiment shown in FIG. 11, as shown in FIG. 15, the seventh processing module 57 may include:

a fusing unit 571, configured to determine a fused lane line sampling point set based on the first lane line sampling point set and the second lane line sampling point set;
a tracking unit 572, configured to determine, based on the fused lane line sampling point set and a historical lane line curve corresponding to a preceding time frame, a tracking relation between the fused lane line sampling point set and the historical lane line curve;
a predicting unit 573, configured to determine a current lane line prediction curve coefficient based on the historical lane line curve and odometer information;
a filtering unit 574, configured to filter the current lane line prediction curve coefficient based on the tracking relation between the fused lane line sampling point set and the historical lane line curve, to obtain a filtered curve coefficient; and
a determining unit 575, configured to determine the lane line based on the filtered curve coefficient.

Refer to the corresponding beneficial technical effects in the section of illustrative method described above for beneficial technical effects corresponding to the illustrative embodiments of this apparatus, which are not repeated here.

Illustrative electronic device

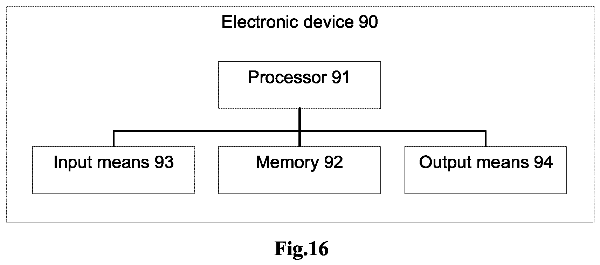

FIG. 16 is a diagram of a structure of an electronic device according to embodiments of this disclosure, where the electronic device includes at least a processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 91 may execute one or more of the program instructions to implement the method according to the various embodiments of this disclosure that are described above and/or other desired functions.

In an example, the electronic device 90 may further include an input means 93 and an output means 94. These components are connected to each other through a bus system and/or another form of connection mechanism (not shown).

The input means 93 may further include, for example, a keyboard and a mouse.

The output means 94 may output various information to the outside, and may include, for example, a display, a speaker, a printer, a communication network, and a remote output device connected to the communication network.

Certainly, for simplicity, FIG. 16 shows only some of components in the electronic device 90 that are related to this disclosure, and components such as a bus and an input/output interface are omitted. In addition, according to specific application situations, the electronic device 90 may further include any other appropriate components.

Illustrative computer program product and computer readable storage medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Illustrative method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A method for determining a lane line, **characterized by** comprising:

   determining (201) a first image corresponding to a first camera and a second image corresponding to a second camera;
   determining (202), based on the first image, a first lane line pixel point set;
   determining (203), based on the second image, a second lane line pixel point set;
   determining (204), based on the first lane line pixel point set and a first extrinsic parameter of the first camera, a first lane line sampling point set corresponding to the first lane line pixel point set in a vehicle local coordinate system;
   determining (205) a corrected extrinsic parameter corresponding to a second extrinsic parameter of the second camera;
   determining (206), based on the second lane line pixel point set and the corrected extrinsic parameter, a second lane line sampling point set corresponding to the second lane line pixel point set in the vehicle local coordinate system; and
   determining (207) the lane line based on the first lane line sampling point set and the second lane line sampling point set.

2. The method according to claim 1, wherein the determining a corrected extrinsic parameter corresponding to a second extrinsic parameter of the second camera comprises:
   determining (2051) the corrected extrinsic parameter corresponding to the second extrinsic parameter based on the first lane line sampling point set, the second lane line pixel point set, and the second extrinsic parameter of the second camera.

3. The method according to claim 2, wherein the first lane line sampling point set comprises a lane line sampling point subset corresponding to a lane line of a road where a vehicle is currently located, the lane line comprising a main lane line of a lane where the vehicle is currently located, and
   wherein the determining the corrected extrinsic parameter corresponding to the second extrinsic parameter based on the first lane line sampling point set, the second lane line pixel point set, and the second extrinsic parameter of the second camera comprises:

   determining (20511), based on the first lane line sampling point set, a first lane line sampling point subset corresponding to the main lane line;
   determining (20512), based on the second lane line pixel point set and the second extrinsic parameter, a second lane line sampling point subset corresponding to the main lane line; and
   determining (20513) the corrected extrinsic parameter corresponding to the second extrinsic parameter based on the first lane line sampling point subset and the second lane line sampling point subset.

4. The method according to claim 3, wherein the determining the corrected extrinsic parameter corresponding to the second extrinsic parameter based on the first lane line sampling point subset and the second lane line sampling point subset comprises:

   performing (205131) curve fitting on the first lane line sampling point subset, to obtain a first main lane line curve corresponding to the main lane line;
   setting (205132) the second lane line sampling point subset as a current lane line sampling point subset;
   determining (205133) a current yaw step size based on the current lane line sampling point subset and the first main lane line curve;
   determining (205134) a current corrected extrinsic parameter based on the current yaw step size and a preceding corrected extrinsic parameter corresponding to the second extrinsic parameter, wherein the preceding corrected extrinsic parameter is a corrected extrinsic parameter determined in a preceding iteration;
   determining (205135), based on the second lane line pixel point set and the current corrected extrinsic parameter, a third lane line sampling point subset corresponding to the main lane line; and
   determining (205136) the current corrected extrinsic parameter as the corrected extrinsic parameter corresponding to the second extrinsic parameter in response to that the third lane line sampling point subset and the first main lane line curve meet an iteration ending condition.

5. The method according to claim 4, wherein the determining a current yaw step size based on the current lane line sampling point subset and the first main lane line curve comprises:

determining target sampling points on the first main lane line curve corresponding respectively to lane line sampling points in the current lane line sampling point subset;
determining lateral deviations corresponding respectively to the lane line sampling points in the current lane line sampling point subset based on the lane line sampling points and the target sampling points; and
determining the current yaw step size based on the lateral deviations.

6. The method according to claim 4, further comprising:
in response to that the third lane line sampling point subset and the first main lane line curve do not meet the iteration ending condition, setting the third lane line sampling point subset as the current lane line sampling point subset, and repeating execution of the determining a current yaw step size based on the current lane line sampling point subset and the first main lane line curve.

7. The method according to claim 3, wherein the determining the corrected extrinsic parameter corresponding to the second extrinsic parameter based on the first lane line sampling point subset and the second lane line sampling point subset comprises:

determining, based on the first lane line sampling point subset and the second lane line sampling point subset, a first corrected extrinsic parameter of the second extrinsic parameter at a current time frame; and
determining the corrected extrinsic parameter corresponding to the second extrinsic parameter based on the first corrected extrinsic parameter and a historical corrected extrinsic parameter of the second extrinsic parameter at a historical time frame.

8. The method according to claim 3, wherein the determining the corrected extrinsic parameter corresponding to the second extrinsic parameter based on the first lane line sampling point subset and the second lane line sampling point subset comprises:

performing curve fitting on the first lane line sampling point subset, to obtain a first main lane line curve corresponding to the main lane line;
determining a current yaw step size based on the second lane line sampling point subset and the first main lane line curve; and
determining the corrected extrinsic parameter corresponding to the second extrinsic parameter based on the current yaw step size, a preceding yaw correction value, the second lane line sampling point subset, and the first main lane line curve, wherein the preceding yaw correction value is a yaw correction value of a corrected extrinsic parameter obtained in a preceding iteration with respect to the second extrinsic parameter.

9. The method according to claim 8, wherein the determining the corrected extrinsic parameter corresponding to the second extrinsic parameter based on the current yaw step size, a preceding yaw correction value, the second lane line sampling point subset, and the first main lane line curve comprises:

determining a current corrected extrinsic parameter based on the current yaw step size, the preceding yaw correction value, and the second extrinsic parameter;
determining, based on the current yaw step size, the preceding yaw correction value, the first main lane line curve, and the second lane line sampling point subset, lateral deviations corresponding respectively to sampling points in the second lane line sampling point subset under the current corrected extrinsic parameter; and
determining the current corrected extrinsic parameter as the corrected extrinsic parameter corresponding to the second extrinsic parameter in response to that the lateral deviations meet an iteration ending condition.

10. The method according to claim 9, further comprising:

in response to that the lateral deviations do not meet the iteration ending condition, determining a next yaw step size based on the lateral deviations; and
setting the next yaw step size as the current yaw step size, setting a current yaw correction value as the preceding yaw correction value, and repeating execution of the determining a current corrected extrinsic parameter based on the current yaw step size, the preceding yaw correction value, and the second extrinsic parameter, wherein the current yaw correction value is a yaw correction value of the current corrected extrinsic parameter with respect to the second extrinsic parameter.

11. The method according to claim 1, wherein the determining a corrected extrinsic parameter corresponding to a second extrinsic parameter of the second camera comprises:

obtaining (205a) a historical corrected extrinsic parameter corresponding to the second extrinsic parameter determined at a historical time frame; and
determining (205b) the historical corrected extrinsic parameter as the corrected extrinsic parameter corresponding to the second extrinsic parameter.

12. The method according to any one of claims 1-11, wherein the determining the lane line based on the first lane line sampling point set and the second lane line sampling point set comprises:

determining (2071) a fused lane line sampling point set based on the first lane line sampling point set and the second lane line sampling point set;
determining (2072), based on the fused lane line sampling point set and a historical lane line curve at a preceding time frame, a tracking relation between the fused lane line sampling point set and the historical lane line curve;
determining (2073) a current lane line prediction curve coefficient based on the historical lane line curve and odometer information;
filtering (2074) the current lane line prediction curve coefficient based on the tracking relation between the fused lane line sampling point set and the historical lane line curve, to obtain a filtered curve coefficient; and
determining (2075) the lane line based on the filtered curve coefficient.

13. An apparatus for determining a lane line, **characterized by** comprising:

a first processing module (51), configured to determine a first image corresponding to a first camera and a second image corresponding to a second camera;
a second processing module (52), configured to determine, based on the first image, a first lane line pixel point set;
a third processing module (53), configured to determine, based on the second image, a second lane line pixel point set;
a fourth processing module (54), configured to determine, based on the first lane line pixel point set and a first extrinsic parameter of the first camera, a first lane line sampling point set corresponding to the first lane line pixel point set in a vehicle local coordinate system;
a fifth processing module (55), configured to determine a corrected extrinsic parameter corresponding to a second extrinsic parameter of the second camera;
a sixth processing module (56), configured to determine, based on the second lane line pixel point set and the corrected extrinsic parameter, a second lane line sampling point set corresponding to the second lane line pixel point set in the vehicle local coordinate system; and
a seventh processing module (57), configured to determine the lane line based on the first lane line sampling point set and the second lane line sampling point set.

14. A computer readable storage medium, **characterized by** storing a computer program thereon, which, when executed by a processor to implement the method according to any one of claims 1-12.

15. An electronic device (90), wherein the electronic device comprises:

a processor (91); and
a memory (92), configured to store processor-executable instructions,
wherein the processor (91) is configured to read the executable instructions from the memory (92), and execute the instructions to implement the method according to any one of claims 1-12.

**Fig.1**

Determining a first image corresponding to a first camera and a second image corresponding to a second camera — 201

Determining, based on the first image, a first lane line pixel point set — 202

Determining, based on the second image, a second lane line pixel point set — 203

Determining, based on the first lane line pixel point set and a first extrinsic parameter of the first camera, a first lane line sampling point set corresponding to the first lane line pixel point set in a vehicle local coordinate system — 204

Determining a corrected extrinsic parameter corresponding to a second extrinsic parameter of the second camera — 205

Determining, based on the second lane line pixel point set and the corrected extrinsic parameter, a second lane line sampling point set corresponding to the second lane line pixel point set in the vehicle local coordinate system — 206

Determining a lane line based on the first lane line sampling point set and the second lane line sampling point set — 207

**Fig.2**

Determining a first image corresponding to a first camera and a second image corresponding to a second camera — 201

Determining, based on the first image, a first lane line pixel point set — 202

Determining, based on the second image, a second lane line pixel point set — 203

Determining, based on the first lane line pixel point set and a first extrinsic parameter of the first camera, a first lane line sampling point set corresponding to the first lane line pixel point set in a vehicle local coordinate system — 204

Determining the corrected extrinsic parameter corresponding to the second extrinsic parameter based on the first lane line sampling point set, the second lane line pixel point set, and the second extrinsic parameter of the second camera — 2051

Determining, based on the second lane line pixel point set and the corrected extrinsic parameter, a second lane line sampling point set corresponding to the second lane line pixel point set in the vehicle local coordinate system — 206

Determining a lane line based on the first lane line sampling point set and the second lane line sampling point set — 207

**Fig.3**

Determining, based on the first lane line sampling point set, a first lane line sampling point subset corresponding to the main lane line — 20511

Determining, based on the first lane line sampling point set, a first lane line sampling point subset corresponding to the main lane line — 20512

Determining the corrected extrinsic parameter corresponding to the second extrinsic parameter based on the first lane line sampling point subset and the second lane line sampling point subset — 20513

**Fig.4**

Determining, based on the first lane line sampling point set, a first lane line sampling point subset corresponding to the main lane line — 20511

Determining, based on the second lane line pixel point set and the second extrinsic parameter, a second lane line sampling point subset corresponding to the main lane line — 20512

Performing curve fitting on the first lane line sampling point subset, to obtain a first main lane line curve corresponding to the main lane line — 205131

Setting the second lane line sampling point subset as a current lane line sampling point subset — 205132

Determining a current yaw step size based on the current lane line sampling point subset and the first main lane line curve — 205133

Determining a current corrected extrinsic parameter based on the current yaw step size and a preceding corrected extrinsic parameter corresponding to the second extrinsic parameter — 205134

Determining, based on the second lane line pixel point set and the current corrected extrinsic parameter, a third lane line sampling point subset corresponding to the main lane line — 205135

Determining the current corrected extrinsic parameter as the corrected extrinsic parameter corresponding to the second extrinsic parameter in response to that the third lane line sampling point subset and the first main lane line curve meet an iteration ending condition — 205136

In response to that the third lane line sampling point subset and the first main lane line curve do not meet the iteration ending condition, setting the third lane line sampling point subset as the current lane line sampling point subset — 205137

**Fig.5**

Matching a wide-angle main lane line sampling point subset and a narrow-angle main lane line point subset — 301

Performing curve fitting on the wide-angle main lane line sampling point subset — 302

Wide-angle main lane line curve

Determining whether an iteration ending condition is met — 303

Y → Recording a narrow-angle corrected extrinsic parameter at a current time frame — 309

Performing multi-frame computation of a yaw value of a narrow-angle extrinsic parameter, until a corrected yaw value becomes stable — 310

N

Updating a yaw value of a current extrinsic parameter of the narrow-angle camera — 304

Current corrected extrinsic parameter

Transforming a narrow-angle main lane line pixel point set to the VCS based on the current corrected extrinsic parameter — 305

Third lane line sampling point subset

Computing lateral deviations — 306

lateral deviations corresponding to sampling points in the third lane line sampling point subset

Computing error sum — 307

Determining an iteration step size and an optimization direction according to the lateral deviation — 308

**Fig.6**

26

Third lane line
sampling point
subset S2

Wide-angle
main lane line
curve S1

d i

P i             Pj

x
o   y

**Fig.7**

Determining a first image corresponding to a first camera and a second image corresponding to a second camera    201

Determining, based on the first image, a first lane line pixel point set    202

Determining, based on the second image, a second lane line pixel point set    203

Determining, based on the second image, a second lane line pixel point set    204

Obtaining a historical corrected extrinsic parameter corresponding to the second extrinsic parameter determined in a historical time frame    205a

Determining the historical corrected extrinsic parameter as the corrected extrinsic parameter corresponding to the second extrinsic parameter    205b

Determining, based on the second lane line pixel point set and the corrected extrinsic parameter, a second lane line sampling point set corresponding to the second lane line pixel point set in the vehicle local coordinate system    206

Determining a lane line based on the first lane line sampling point set and the second lane line sampling point set...    207

**Fig.8**

Determining a first image corresponding to a first camera and a second image corresponding to a second camera — 201

Determining, based on the first image, a first lane line pixel point set — 202

Determining, based on the second image, a second lane line pixel point set — 203

Determining, based on the first lane line pixel point set and a first extrinsic parameter of the first camera, a first lane line sampling point set corresponding to the first lane line pixel point set in a vehicle local coordinate system — 204

Determining a corrected extrinsic parameter corresponding to a second extrinsic parameter of the second camera — 205

Determining, based on the second lane line pixel point set and the corrected extrinsic parameter, a second lane line sampling point set corresponding to the second lane line pixel point set in the vehicle local coordinate system — 206

Determining a fused lane line sampling point set based on the first lane line sampling point set and the second lane line sampling point set — 2071

Determining, based on the fused lane line sampling point set and a historical lane line curve at a preceding time frame, a tracking relation between the fused lane line sampling point set and the historical lane line curve — 2072

Determining a current lane line prediction curve coefficient based on the historical lane line curve and odometer information — 2073

Filtering the current lane line prediction curve coefficient based on the tracking relation between the fused lane line sampling point set and the historical lane line curve, to obtain a filtered curve coefficient — 2074

Determining the lane line based on the filtered curve coefficient — 2075

**Fig.9**

Narrow-angle lane line
sampling point set S3 in
VCS obtained by
transformation based on
second extrinsic parameter

Narrow-angle lane line sampling
point set S4 in VCS obtained by
transformation based on
corrected extrinsic parameter

Wide-angle lane line
sampling point set S5

**Fig.10**

First processing module 51

Second processing module 52

Third processing module 53

Fourth processing module 54

Fifth processing module 55

Sixth processing module 56

Seventh processing module 57

**Fig.11**

First processing module 51

Second processing module 52

Third processing module 53

Fifth processing module 55

First processing unit 551

Fourth processing module 54

Sixth processing module 56

Seventh processing module 57

**Fig.12**

First processing module 51

Second processing module 52

Third processing module 53

Fourth processing module 54

Fifth processing module 55

First processing unit 551

First determining subunit 5511

First processing subunit 5512

Second processing subunit 5513

Sixth processing module 56

Seventh processing module 57

**Fig.13**

First processing module 51

Second processing module 52

Third processing module 53

Fifth processing module 55

Second processing unit 552

Third processing unit 553

Fourth processing module 54

Sixth processing module 56

Seventh processing module 57

**Fig.14**

First processing module 51

First processing module 51

Third processing module 53

Fourth processing module 54

Fifth processing module 55

Sixth processing module 56

Fusing unit 571

Tracking unit 572

Predicting unit 573

Filtering unit 574

Determining unit 575

Seventh processing module 57

**Fig.15**

Electronic device 90

Processor 91

Input means 93

Memory 92

Output means 94

**Fig.16**